# EUROPÄISCHE PATENTANMELDUNG

(11) **EP 4 361 376 A1**
(43) Veröffentlichungstag der Anmeldung: **01.05.2024**
(21) Anmeldenummer: 23205833.9
(22) Anmeldetag: 25.10.2023
(51) Int. Cl.: E04G 15/06, E04G 21/18, F16L 3/10

(54) **ROHRHALTERUNG ZUM BEFESTIGEN VON MINDESTENS EINEM ROHR UND VERFAHREN ZUR HERSTELLUNG DER ROHRHALTERUNG**

(30) Priorität: 31.10.2022 CH 12922022
(71) Anmelder: Göktas, Dogan, 8864 Reichenburg (CH)
(72) Erfinder: Göktas, Dogan, 8864 Reichenburg (CH)
(74) Vertreter: Rentsch Partner AG

(57) **Zusammenfassung**

Die vorliegende Offenbarung betrifft eine Rohrhalterung (100, 101) zum Befestigen von mindestens einem Rohr und ein Verfahren zur Herstellung der Rohrhalterung (100, 101), aufweisend eine Basisplatte (104) und mindestens ein mit der Basisplatte (104) einteilig oder mehrteilig ausgebildetes Stützelement (111), wobei die Basisplatte (104), eine Montagestruktur (106) aufweist, die dazu ausgebildet ist die Basisplatte (104) an einer Basisstruktur zu befestigen, wobei das mindestens eine Stützelement (111) eine Rohrhalterungsstruktur (115) aufweist, die dazu ausgebildet ist das mindestens eine Rohr an dem mindestens einen Stützelement (111) zu befestigen, und wobei das mindestens eine Stützelement (111) dazu ausgebildet ist mittels einer Schwenk- und / oder Biegebewegung senkrecht zur Basisplatte (104) ausgerichtet zu werden, wodurch das dadurch ausgerichtete Stützelement (111) mindestens teilweise eine Stütze (112) der Rohrhalterung (100) zum Befestigen des mindestens einen Rohrs bildet.

## Beschreibung

### TECHNISCHES GEBIET DER OFFENBARUNG

Die vorliegende Offenbarung betrifft eine Rohrhalterung zum Befestigen von mindestens einem Rohr und ein Verfahren zur Herstellung der Rohrhalterung. Insbesondere betrifft die vorliegende Offenbarung eine Rohrhalterung zum Befestigen von mindestens einem Rohr, wobei die Rohrhalterung eine Basisplatte und mindestens ein mit der Basisplatte einteilig oder mehrteilig ausgebildetes Stützelement aufweist. Die vorliegende Offenbarung betrifft weiterhin ein Verfahren zur Herstellung einer solchen Rohrhalterung.

### HINTERGRUND DER OFFENBARUNG

Rohrhalterungen sind aus dem Stand der Technik gut bekannt. Sie dienen besonders zur Befestigung von Rohren an Schalungen auf Baustellen und werden anschliessend gemeinsam mit dem an ihnen befestigten Rohr einbetoniert, beispielsweise in eine Bodenplatte eines Gebäudes oder in ein Fundament. Derartige Rohrhalterungen weisen typischerweise ein Grundelement und zwei separate Stützen auf, an denen mindestens ein Rohrschellenbügel befestigt ist, der die Stützen verbindet und eine Auflage für ein Rohr oder Rohre bildet. In einer typischen Anordnung werden zwei zueinander beabstandet an den Stützen angeordnete Rohrschellenbügel eingesetzt, wobei das Rohr zwischen den Rohrschellenbügeln positioniert wird. Ebenso ist es aber auch möglich, lediglich ein Rohreschellenelement mit einem Kabelbinder einzusetzen.

Zur Fixierung des Rohrschellenbügels oder der Rohrschellenbügel an den Stützen werden typsicherweise federnde Klammern eingesetzt. Derartige Rohrhalterungen sind etwa aus der CH700182B1, oder der EP2910829B1 bekannt. Sämtliche Bauelemente werden herkömmlich in separaten Verpackungen geliefert und werden anschliessend zu einer Rohrhalterung zusammengesetzt.

Ausserdem sind diverse Rohrhalterungen in geschweissten Ausführungen bekannt. Diese geschweissten Rohrhalterungen benötigen jedoch relativ viel Platz, welcher während des Transports und auf Baustellen nicht immer unbegrenzt vorhanden ist.

Ausserdem sind herkömmliche alternative Stützen bekannt, die einzeln in eine Holzverschalung eingeschlagen werden können, beispielsweise aus der CH668467A5. Zu diesem Zweck weisen die Stützen herkömmlich mindestens drei Spitzen auf, die sich in der Schalung verankern lassen. Zwei solcher Stützen mit insgesamt sechs Spitzen werden parallel zueinander eingeschlagen und mit einem Rohrschellenbügel verbunden, auf welchen ein Rohr aufliegen kann. Die in die Schalung eingeschlagenen sechs Spitzen, müssen nach Entfernung der Schalung aufwendig entfernt werden, da sie aus dem fertigen Betonstück herausragen. Ausserdem ist es bei rostenden Materialien notwendig, dass die Betonstellen an denen die Spitzen aus dem Beton hervorragten mittels Zinkspray behandelt werden, um Korrosion zu vermeiden. Die Anordnung und Positionierung derartiger Stützen senkrecht zur Verschalung ist mühsam und die Nacharbeit aufwendig.

### DARSTELLUNG DER VORLIEGENDEN OFFENBARUNG

Die Aufgabe der vorliegenden Offenbarung besteht darin eine Rohrhalterung und ein Verfahren zur Herstellung einer Rohrhalterung zu schaffen. Insbesondere besteht die Aufgabe der vorliegenden Offenbarung darin, eine Rohrhalterung und ein Verfahren zur Herstellung der Rohrhalterung zu schaffen, die bzw. das zumindest einen der oben genannten Nachteile nicht aufweist.

Diese Aufgabe wird durch die Merkmale der unabhängigen Patentansprüche gelöst. Weitere vorteilhafte Ausführungsformen sind in den abhängigen Patentansprüchen und in der Beschreibung aufgeführt.

Gemäss der vorliegenden Offenbarung wird eine Rohrhalterung zum Befestigen von mindestens einem Rohr beschrieben. Die Rohrhalterung weist eine Basisplatte und mindestens ein mit der Basisplatte einteilig oder mehrteilig ausgebildetes Stützelement auf. Die Basisplatte ist gemäss der ersten Ausführungsform mit dem mindestens einen Stützelement integral, also aus einem Bauteil, bspw. aus einem Blechbiegeteil, geformt. Gemäss der zweiten Ausführungsform sind die Basisplatte und das mindestens eine Stützelement zwei oder mehr Bauteile, welche beispielsweise mittels eines Verbindungsbereichs miteinander verbunden sind. Die Basisplatte weist zudem eine Montagestruktur auf, die dazu ausgebildet ist die Basisplatte an einer Basisstruktur zu befestigen. Die Basisstruktur ist beispielsweise eine Verschalung, eine Betonverschalung, und / oder Armierungseisen auf einer Baustelle. Gemäss der vorliegenden Offenbarung ist das mindestens eine Stützelement dazu ausgebildet, mittels einer Schwenk- und/ oder Biegebewegung, insbesondere senkrecht, zur Basisplatte ausgerichtet zu werden, wodurch das dadurch ausgerichtete Stützelement zumindest teilweise eine Stütze der Rohrhalterung zum Befestigen des mindestens einen Rohrs bildet. Das Stützelement ist beispielsweise für einen platzsparenden Transport auf die Baustelle und zur Lagerung an der Baustelle horizontal zur Basisplatte ausgerichtet. Vor Benutzung der Rohrhalterung wird das Stützelement mittels der Schwenk- und/oder Biegebewegung von der horizontalen Transportposition in die bspw. senkrechte Arbeitsposition gebogen / verschwenkt. Anschliessend wird die Basisplatte mittels der Montagestruktur an der Basisstruktur, beispielsweise der Verschalung oder der Armierung, angebracht. Die Basisplatte bietet eine vergleichsweisse grosse Auflagefläche, wodurch ein vorteilhaft einfaches und genaues Anbringen an der Verschalung oder Armierung möglich ist. Insbesondere jedoch kann mittels der Rohrhalterung gemäss der vorliegenden Offenbarung während des Transports und auf der Baustelle viel Platz im Vergleich zu bereits vorgefertigten Rohrhalterungen eingespart werden. Zudem kann die Rohrhalterung gemäss der vorliegenden Offenbarung von jedermann mittels nur einer Schwenk- und/ oder Biegebewegung für die Verwendung fertiggestellt werden. Andere Rohrhaltungen, die eine Stütze aufweisen, die beispielsweise mit der Basisplatte verschraubt oder anderweitig zusammengeführt werden muss, sind weitaus aufwendiger auf der Baustelle fertigzustellen.

Während des Transports und während der Lagerung auf der Baustelle ist das Stützelement beispielsweise unausgerichtet, insbesondere horizontal zur Basisplatte ausgerichtet. In dieser unausgerichteten Position bildet das Stützelement noch nicht die Stütze. Erst sobald mittels der Schwenk- und/ oder Biegebewegung das Stützelement von der unausgerichteten Position in die ausgerichtete Position ausgerichtet / bewegt wurde, bildet das Stützelement zumindest teilweise die Stütze der Rohrhalterung.

Die Ausrichtung oder Aufrichtung des Stützelements, insbesondere senkrecht, zur Basisplatte umfasst gemäss einer Ausführungsform einen Bereich von 0° bis plus minus 30° zur Normalen der Haupterstreckungsebene der Basisplatte. In anderen Worten, das Stützelement muss nicht zwingend zu exakt 90° zur Basisplatte ausgerichtet sein, um zumindest teilweise die Stütze zu bilden. In einer anderen Ausführungsform können die Stützelemente von 0 bis 90 ° frei bewegt (gebogen oder geschwenkt) und entsprechend frei positioniert werden.

Gemäss einer Ausführungsform ist das mit der Basisplatte einteilig ausgebildete Stützelement derart eingerichtet, dass es um eine Biegekante mittels der Biegebewegung zur Basisplatte ausgerichtet werden kann. Die Biegekante, bzw. der Biegebereich verbindet das Stützelement / die Stütze mit der Basisplatte. Gemäss einer weiteren Ausführungsform ist das mit der Basisplatte mehrteilig ausgebildete Stützelement derart eingerichtet, dass es um eine Schwenkachse mittels der Schwenkbewegung zur Basisplatte ausgerichtet werden kann. Die Schwenkachse definiert die entsprechende Rotationsbewegung und schafft zumindest teilweise den Verbindungsbereich zwischen Basisplatte und Stützelement / Stütze. Gemäss der mehrteiligen Ausführungsform ist beispielsweise zusätzlich eine Schwenkwelle vorgesehene, welche das Stützelement mit der Basisplatte verbindet und die Schwenkachse vorgibt. Die Schwenkwelle ist beispielsweise an der Basisplatte und an dem Stützelement angeordnet.

Gemäss einer Ausführungsform ist das Stützelement bereits vorgebogen, das Stützelement ist beispielsweise bereits zwischen 5-20° insbesondere zu 10° zur Hauterstreckungsebene der Basisplatte ausgerichtet. Dies erleichtert das finale Biegen / Verschwenken auf der Baustelle und gewährt trotzdem die gewünschten platzsparenden Vorteile.

Gemäss einer Ausführungsform weist die Basisplatte eine Vielzahl von Öffnungen auf, die zumindest teilweise die Montagestruktur bilden. Die Öffnungen können beispielsweise Rundlöcher, Langlöcher, Schlitze, insbesondere sich kreuzende Schlitze sein, die an verschiedenen Stellen an der Basisplatte angeordnet sind. Die Öffnungen sind dazu ausgebildet Elemente wie beispielsweise Kabelbinder, Armierungsdrähte, Nägel oder Schrauben aufzunehmen, mittels welcher die Basisplatte vorteilhaft an der Basisstruktur, insbesondere an der Verschalung oder Armierung montiert werden kann. Die Öffnungen können dementsprechend auch ein Gewinde zur Aufnahme von Schrauben aufweisen. Demensprechend bilden die Öffnungen zumindest teilweise die Montagestruktur.

Gemäss einer Ausführungsform weist die Basisplatte eine Mehrzahl von spitzförmigen Vorsprüngen auf, die senkrecht zur Basisplatte ausgerichtet sind und zumindest teilweise die Montagestruktur bilden. Die spitzförmigen Vorsprünge sind beispielsweise Spitzen, die senkrecht zur Haupterstreckungsebene der Basisplatte ausgerichtet sind, insbesondere sind die spitzförmigen Vorsprünge in die entgegengesetzte Richtung wie die fertige Stütze ausgerichtet. Mittels der spitzförmigen Vorsprünge kann vorteilhaft einfach die Basisplatte an der Verschalung / Armierung montiert / angeordnet werden.

Gemäss einer weiteren Ausführungsform weist die Basisplatte mindestens ein spitz zulaufendes Schlitzpaar auf, das einen unausgerichteten spitzförmigen Vorsprung bildet, wobei der spitzförmigen Vorsprung dazu ausgebildet ist mittels einer Biegebewegung senkrecht zur Basisplatte ausgerichtet zu werden, wodurch der dadurch ausgerichtete spitzförmigen Vorsprung zumindest teilweise die Montagestruktur bildet. Ähnlich wie für das Stützelement, kann auch mindestens ein unausgerichteter spitzförm iger Vorsprung in der Basisplatte vorgesehen sein, der beispielsweise mittels eines oder mehrere Hammerschläge im Wesentlichen senkrecht zur Basisplatte ausgerichtet werden kann, wodurch der ausgerichtete spitzförmige Vorsprung in die Verschalung eingeschlagen werden kann und dadurch zumindest teilweise die Montagestruktur bildet.

Gemäss einer Ausführungsform weist zumindest einer der spitzförmigen Vorsprünge eine Sollbruchstelle, insbesondere auf der Höhe der maximalen Einschlagtiefe, auf. An der Sollbruchstelle kann die aus dem fertigen Betonbauteil herausragende Spitze vorteilhaft einfach abgebrochen werden.

Gemäss einer Ausführungsform weist die Basisplatte mindestens einen Seitenschenkel auf, der sich senkrecht zur Basisplatte erstreckt, insbesondere senkrecht ausgehend von einer Kante der Basisplatte erstreckt, wobei der Seitenschenkel dazu eingerichtet mindestens teilweise die Montagestruktur zu bilden. Der Seitenschenkel ist beispielsweise ein Blechelement, welches senkrecht zur Haupterstreckungsrichtung der Basisplatte angeordnet ist. Der Seitenschenkel ist beispielsweise an das Basiselement angeschweisst. Gemäss einer weiteren Variante ist der Seitenschenkel einteilig mit der Basisplatte ausgebildet und mittels einer Biegung ausgeformt. Die Biegung kann bereits vorgefertigt sein oder auf der Baustelle durchgeführt werden. Mittels des Seitenschenkels kann die Rohrhalterung vorteilhaft einfach an beispielsweise eine Leiste auf der Verschalung oder an einem Armierungseisen angeordnet werden, dementsprechend dient der Seitenschenkel als Anschlag bzw. als Aufnahme für das Armierungseisen. Gemäss einer Ausführungsform kann auch der Seitenschenkel Öffnungen, insbesondere Bohrungen (Langlöcher), aufweisen. Diese Öffnungen dienen beispielsweise dazu Befestigungselemente, die in die Leiste der Verschalung eingebracht werden, aufzunehmen. Diese Öffnungen können ebenso ein Gewinde aufweisen. Gemäss einer weiteren Ausführungsform weisst mindestens einer der Seitenschenkel eine Rasterungsstruktur auf, die dazu ausgebildet ist mit einem zusätzlichen Bauteil, welches mit dem Seitenschenkel zusammenwirkt, eine formschlüssige Verbindung zu bilden.

Gemäss einer Ausführungsform bildet der mindestens eine Seitenschenkel oder eine Mehrzahl der Seitenschenkel zusammen mit der Basisplatte eine H- h- L- oder V-Form. In anderen Worten, die Seitenschenkel sind derart an der Basisplatte angeordnet oder erstrecken sich derart von der Basisplatte, dass mindestens eine der genannten Formen ausgebildet ist. Andere Formen wie bspw. W-M- oder X-Formen sind auch denkbar. Relevant ist, dass mit den Seitenschenkeln eine Auskragung aus der Basisplatte geschaffen wird, die eine vereinfachte Befestigung der Rohrhalterung ermöglicht.

Gemäss einer weiteren Ausführungsform bildet die Basisplatte und / oder mindestens einer der Seitenschenkel eine Schiene. Die Schiene kann beispielsweise an der Basisplatte oder den Seitenschenkeln angebracht sein oder sie wird durch die Basisplatte oder den mindestens einen Seitenschenkel selbst gebildet. Die Schiene kann beispielsweise in Armierungseisen eingreifen oder mit zusätzlichen Bauelementen eingreifen, welche in die Schiene eingeschoben werden. Die Rohrhalterung kann beispielsweise auch entlang der Schiene verschoben werden.

Gemäss einer Ausführungsform bildet das mindestens eine ausgerichtete Stützelement die Stütze der Rohrhalterung alleine. In anderen Worten, mittels der Schwenk und / oder Biegebewegung wird die das Stützelement zur vollständigen Stütze gebogen. Die Länge des Stützelements entspricht der Länge der Stütze.

Gemäss einer anderen Ausführungsform bildet das ausgerichtete Stützelement in Kombination mit mindestens einem Verbindungselement, welches mit dem Stützelement verbunden ist, die Stütze der Rohrhalterung. Das Verbindungselement ist ein separates Bauteil, welches beispielsweise mit dem ausgerichteten oder unausgerichteten Stützelement verbunden, bspw. verschraubt, eingerastet oder verschweisst, ist. Die Länge der Stütze entspricht der Länge des Stützelements und der Länge des Verbindungselements. Das Verbindungselement weist beispielsweise dasselbe Profil wie das Stützelements auf und ist beispielsweise eine Verlängerung des Stützelements. Die Länge des Verbindungselements definiert die Höhe der Stütze. Verschiedene Längen des Verbindungselements können für unterschiedlichen Höhen der Stütze verwendet werden. Das separate Verbindungselement, welches bspw. auf der Baustelle an dem Stützelement montiert wird, kann platzsparende Vorteile aufweisen.

Gemäss einer Ausführungsform weist das mindestens eine Stützelement einen ersten Basisschenkel und mindestens einen Seitenschenkel auf, der sich mit einem vordefinierten Winkel, insbesondere senkrecht, von dem Basisschenkel aus erstrecken. Gemäss dieser Ausführungsform weist das Stützelement ein V-Profil, L-Profil oder ein Winkelprofil, geformt aus dem Basisschenkel und dem oder den Seitenschenkel(n), auf. Das Verbindungselement kann als Verlängerung des Stützelements ein ähnliches oder identisches Profil aufweisen.

Gemäss einer Ausführungsform weist das mindestens eine Stützelement zwei Seitenschenkel auf. Die zwei Stützelemente erstrecken sich jeweils untern einem bestimmten Winkel, insbesondere senkrecht, von dem Basisschenkel aus und sind beabstandet voneinander ausgerichtet, und sind insbesondere parallel zueinander ausgerichtet. Gemäss dieser Ausführungsform weist das Stützelement beispielswiese ein U-Profil auf. Die Seitenschenkel gemäss dieser und der vorgenannten Ausführungsform können beispielsweise auf der Baustelle mittels einer Biegebewegung ausgerichtet werden oder bereits vorgefertigt sein. Die Stützelemente bzw. die Stützen aufweisend derartige Profile, insbesondere L-, V- oder U- förmigen Profile, weisen vorteilhafte Festigkeitseigenschaften auf. Das Verbindungselement kann als Verlängerung des Stützelements ein ähnliches oder identisches Profil aufweisen.

Gemäss der vorliegenden Offenbarung weist das mindestens eine Stützelement und / oder das Verbindungselement zudem eine Rohrhalterungsstruktur auf, die dazu ausgebildet ist das mindestens eine Rohr an dem mindestens einen Stützelement zu befestigen. Mittels der Rohrhalterungsstruktur kann das Rohr an der Stütze befestigt werden. Die Rohrhalterungsstruktur kann in einer seiner einfachsten Ausführungsform beispielsweise Öffnungen umfassen.

Gemäss einer Ausführungsform sind in mindestens einem Seitenschenkel und / oder in dem Basisschenkel Rastausnehmungen ausgebildet, die zumindest teilweise die Rohrhalterungsstruktur des Stützelements bzw. der Stütze bilden. Die Rastausnehmungen sind beispielsweise auch in zwei sich gegenüberliegenden Seitenschenkeln angeordnet. Die Rastausnehmungen sind beispielsweise Öffnungen, insbesondere Langlöcher, oder Ausnehmungen die sich senkrecht zur Haupterstreckungsrichtung der Stütze erstrecken. Die Rastausnehmungen sind beispielsweise parallel zueinander und übereinander angeordnet. Die Rastausnehmungen bieten eine vorteilhaft einfache Möglichkeit Rohrschellen, Bügel oder Rohre direkt zu befestigen.

Gemäss einer Ausführungsform weist das mindestens eine Stützelement und / oder die Basisplatte eine Arretiervorrichtung, insbesondere formschlüssige Arretiervorrichtung, auf, die dazu ausgebildet ist das Stützelement nach Ausrichtung zur Stütze zu arretieren bzw. zu fixieren. Die Arretiervorrichtung kann aus Elementen auf der Basisplatte und / oder aus Elementen auf dem Stützelement bzw. der Stütze gebildet sind. Beispielsweise kann die Arretiervorrichtung aus einem Vorsprung in der Stütze oder der Basisplatte und einer entsprechenden Ausnehmung in der Stütze oder der Basisplatte gebildet sein.

Gemäss einer Ausführungsform weist das mindestens eine Stützelement an seinem der Biegekante oder der Basisplatte zugewandten Ende ein Rastelement auf, das dazu ausgebildet ist in eine Rastöffnung in der Basisplatte einzugreifen, wenn das Stützelement mittels der Schwenk- und / oder Biegebewegung, insbesondere senkrecht, zur Basisplatte ausgerichtet wird. Gemäss dieser Ausführungsform weisst die Basisplatte eine Rastöffnung an einer vordefinierten Stelle auf. Zudem weist das mindestens eine Stützelement das Rastelement an einer vordefinierten Stelle auf, sodass das Rastelement durch die Rastöffnung in die Basisplatte eingreifen kann. Diese Eingreifung passiert während der Schwenk und / oder Biegebewegung. Das Rastelement ist beispielsweise ein integral mit dem Stützelement ausgebildeter Vorsprung. Das Rastelement kann auch beispielsweise angeflanscht / angeschweisst sein. Mittels des Rastelements ist eine einfache Verankerung des Stützelements in der Basisplatte realisierbar. Alternativ kann beispielsweise das Stützelement, insbesondere einer der Seitenschenkel, an die Basisplatte angeschweisst werden. Mittels der Eingreifung des Rastelements ist die Stütze vorteilhaft fest zur Basisplatte ausgerichtet. Mittels des Rastelements kann die Stabilität der Stütze zu der Basisplatte vorteilhaft einfach erhöht werden. Das Rastelement und die Rastöffnung bilden demgemäss die Arretiervorrichtung.

Gemäss einer Ausführungsform weist der mindestens eine Seitenschenkel an seinem der Biegekante und / oder der Basisplatte zugewandten Ende das Rastelement auf. Es ist vorteilhaft einfach die Stütze in der Basisplatte zu verankern, wenn das Rastelement an dem Seitenschenkel, insbesondere an seinem der Beigekante und / oder der Basisplatte zugewandten Ende angeordnet ist, da die Rohrhalterung eine erhöhte Steifigkeit aufweist.

Gemäss einer Ausführungsform ist das Rastelement mit der Basisplatte verbindbar, beispielsweise mittels einer Schraubverbindung. Weitere Verbindungen zwischen dem Rastelement und der Basisplatte sind ebenso denkbar.

Gemäss einer Ausführungsform ist die Rastöffnung in der Basisplatte schlitzförmig ausgebildet und das Rastelement weist ein längliches Querschnittsprofil auf, sodass das Rastelement in die schlitzförmige Rastöffnung durchgeführt werden kann, wobei das Rastelement dazu ausgebildet ist mittels einer Biegebewegung eine formschlüssige Verbindung zwischen dem Stützenelement und der Basisplatte auszubilden. Die Biegebewegung kann beispielsweise mittels einem oder mehreren Hammerschlägen realisiert werden.

Gemäss einer Ausführungsform ist die Rastöffnung in der Basisplatte schlitzförmig ausgebildet ist und das Rastelement weist an seiner Spitze mindestens einen seitlich angeordneten Vorsprung auf. Das Rastelement mit dem mindestens einen seitlichen Vorsprung ist dazu ausgebildet mittels der Biegebewegung des Stützelements durch die schlitzförmige Rastöffnung der Basisplatte durchgeführt zu werden, und mittels einer Rotationsbewegung und / oder einer Biegebewegung des mindestens einen seitlichen Vorsprungs relativ zu der schlitzförmigen Rastöffnung eine formschlüssige Verbindung zwischen dem Rastelement und der Basisplatte auszubilden. Gemäss dieser Ausführungsform ist die Rastöffnung in der Basisplatte schlitzförmig ausgebildet und entspricht damit der schlitzförmigen Form des Rastelements, sodass das Rastelement vorteilhaft einfach in die Rastöffnung eingeführt werden kann. Das Rastelement kann auch zwei gegenüberliegende seitlich angeordnete Vorsprünge aufweisen, wodurch eine Flügelform ausgebildet ist. Die Vorsprünge können beispielsweise durch eine Vertiefung oder Ausnehmung in dem Rastelement gebildet werden. Die Biegebewegung zur Ausbildung der formschlüssigen Verbindung kann beispielsweise mittels einem oder mehreren Hammerschlägen erfolgen. Die Rotationsbewegung zur Ausbildung der formschlüssigen Verbindung kann beispielweise mittels einer Zange eingebracht werden, die an dem mindestens einen Vorsprung angreift und relativ zur Basisplatte rotiert wird.

Gemäss einer Ausführungsform weist das Rastelement an mindestens einer seiner Seitenflächen eine von der jeweiligen Seitenfläche vorstehende Rastnase auf, wobei die Rastnase dazu ausgebildet ist mittels der Schwenk und / oder Biegebewegung des Stützelements durch die Rastöffnung der Basisplatte durchgeführt zu werden und eine formschlüssige Verbindung zwischen der Rastnase und der Basisplatte auszubilden. Die Rastnase ist beispielsweise ein prismenförmiges oder pyramidenähnliches Element, welches durch ein teilweises Stanzen durch das Rastelement ausgebildet ist. In einer anderen Ausführungsform ist die Rastnase ein zusätzliches Bauteil, welches an dem Rastelement montiert, bspw. angeschweisst, ist. Die Rastnase wird durch die Biegebewegung des Stützelements an der Rastöffnung entlanggeführt, wodurch sich das Rastelement elastisch verformt. Sobald die Rastnase auf der anderen Seite der Basisplatte an der Rastöffnung hervortritt, geht die elastische Verformung des Rastelements zurück, und die Rastnase rastet mit einer flachen Oberfläche (z.B.: Basis der Pyramidenform) und der Oberfläche der Basisplatte ein, wodurch der Formschluss zwischen Rastelement und Basisplatte ausgebildet ist.

Gemäss einer Ausführungsform weisen die Seitenschenkel des Stützelements jeweils mindestens eine der vorgenannten Rastelemente auf. Gemäss einer weiteren Ausführungsform weist einer der Seitenschenkel oder der Basisschenkel eines der vorgenannten Rastelemente auf und der andere Seitenschenkel eines der vorgenannten Rastelement auf, wobei dieses Rastelement sich von dem ersten unterscheidet. Dementsprechend weist das Stützelement zwei verschiedene Rastelemente auf, wodurch die verschiedenen vorteilhaften Eigenschaften kombiniert werden können.

Gemäss einer Ausführungsform weist die Basisplatte zwei mit der Basisplatte einteilig oder mehrteilig ausgebildete Stützelemente auf, wobei die Stützelemente derart an der Basisplatte angeordnet sind, dass sie jeweils mittels der Biegebewegung parallel oder versetzt zueinander und voneinander gegenüberliegend beabstandet ausrichtbar sind. Gemäss dieser Ausführungsform weisst die Basisplatte zwei Stützelemente auf, die jeweils zur Stütze hingebogen werden können. Zwischen zwei Stützen kann vorteilhaft einfach mindestens ein Rohr angebracht werden. Zudem weisen beide Stützen durch die Anordnung an der Basisplatte immer den vordefinierten Abstand zueinander auf, wodurch die Anbringung des mindestens einen Rohrs vereinfacht ist.

Gemäss einem weiteren Aspekt der vorliegenden Offenbarung weist eine Rohrhalterung gemäss einem der vorhergehenden Ansprüche, die mindestens eine im Wesentlichen senkrecht zur Basisplatte ausgerichtete Stütze auf, bevorzugt zwei senkrecht zur Basisplatte ausgerichtete Stützen auf.

Gemäss einer Ausführungsform weist die Rohrhalterung zusätzlich einen Rohrschellenbügel auf, der zur Anordnung an mindestens einer der Stützen zum Befestigen von dem mindestens einen Rohr ausgebildet ist. Der Rohrschellenbügel ist beispielsweise zwischen den beiden Stützen in den Rastausnehmungen der Rohrhalterungsstruktur angeordnet.

Gemäss einer Ausführungsform ist der Rohrschellenbügel nach der Ausrichtung des mindestens einen Stützelements, insbesondere nach der Ausrichtung zweier Stützelemente, entlang der mindestens einen resultierenden Stütze an verschiedenen Positionen zur Befestigung des mindestens einen Rohrs ausrichtbar. In anderen Worten, der Rohrschellenbügel kann entlang der Stütze(n) hoch oder runter bewegt, und anschliessend fixiert werden. Der Rohrschellenbügel ist dabei insbesondere mit den Rastausnehmungen in den Stützen an den gewünschten Positionen fixierbar. Das Rohr ist beispielsweise auf den Rohrschellenbügel aufgelegt und ggf. zusätzlich mit einem Kabelbinder oder einem anderen seilartigen Verbindungselement befestigt.

Gemäss einer Ausführungsform ist der Rohrschellenbügel derart an der Rohrhalterung angeordnet, dass dieser erst nach Ausrichtung der Stützelemente an den resultierenden Stützen verschoben werden kann. In anderen Worten, im unausgerichteten Zustand kann der Rohrschellenbügel nicht entlang der Stützelemente verschoben werden, sondern erst nachdem die Stützelemente zu den Stützen ausgerichtet worden sind. Der Rohrschellenbügel kann beispielsweise teilweise oder vollständig aus Metall oder Kunststoff oder einer Kombination davon hergestellt sein. Der Rohrschellenbügel kann auch mehrteilig aufgebaut sein und erst nach Verschiebung entlang der Stützen verbunden werden.

Der Rohrschellenbügel bildet dementsprechend zusammen mit den Rastausnehmungen zumindest teilweise die Rohrhalterungsstruktur. Gemäss einer Ausführungsform sind zwei Rohrschellenbügel zwischen den zwei Stützen angeordnet, wobei die Anordnung derart ausgebildet ist, dass das mindestens eine Rohr zwischen den beiden Rohrschellenbügeln angeordnet ist. In anderen Worten, das Rohr ist zwischen den Rohrschellenbügel angeordnet / eingeklemmt.

Gemäss einer weiteren Ausführungsform sind die Seitenschenkel der Basisplatte und / oder die Montagestruktur der Basisplatte derart ausgebildet, dass diese mittels eines Montagedrahts an Armierungseisen verbindbar sind. Der Montagedraht ist beispielsweise mittels eines Drahtbindegeräts entsprechend anbringbar. Die Seitenschenkel weisen dementsprechend lediglich eine Breite von weniger gleich 20 mm, bevorzugt weniger gleich 10 mm auf, sodass das Drahtbindegerät um die Seitenschenkel und die Armierungseisen entsprechend zur Anordnung des Montagedrahts angebracht werden kann.

Gemäss einem weiteren Aspekt der vorliegenden Offenbarung weist ein Verfahren zur Herstellen einer einteiligen Rohrhalterung zum Befestigen mindestens einen Rohrs die folgenden Schritte auf:
a. bereitstellen einer unausgerichteten Rohrhalterung aufweisend eine Basisplatte und mindestens ein mit der Basisplatte einteilig oder mehrteilig ausgebildetes Stützelement, gemäss einem der vorhergehenden oder nachfolgenden Absätze;
b. biegen und / oder schwenken des mindestens einen Stützelements bis das Stützelement senkrecht zur Basisplatte ausgerichtet ist, wodurch das dadurch ausgerichtete Stützelement mindestens teilweise eine Stütze der ausgerichteten Rohrhalterung zum Befestigen mindestens einen Rohrs bildet.

Das Verfahren wird beispielsweise auf einer Baustelle durchgeführt, in welcher die Rohrhalterungen eingesetzt werden. Dementsprechend werden die Rohrhalterungen in einem ungebogenen / unausgerichteten Zustand zur Baustelle platzsparend Transportiert und dort gelagert. Anschliessend wird das mindesten eine Stützelement bis das Stützelement wie gewünscht zur Basisplatte ausgerichtet ist, gebogen / verschwenkt, insbesondere senkrecht zur Basisplatte gebogen / verschwenkt, wodurch zumindest teilweise die Stütze der Rohrhalterung vollends ausgebildet ist und die Rohrhalterung mittels der Montagestruktur an einer Verschalung oder der Armierung befestigt werden kann.

Gemäss einer Ausführungsform kann in einem weiteren Verfahrensschritt zusätzlich das Verbindungselement an dem unausgerichteten oder ausgerichteten Stützelement angeordnet werden. Gemäss dieser Ausführungsform wird die Stütze durch das Stützelement und das Verbindungselement gebildet.

Zusätzlich kann in einem weiteren Verfahrensschritt das Rastelement mittels einer Biegebewegung und oder mittels einer Rotationsbewegung in eine formschlüssige Verbindung mit der Basisplatte gebracht werden. Dadurch ist eine hohe Stabilität der Stütze zu der Basisplatte vorteilhaft realisierbar.

Zusätzlich kann in einem weiteren Verfahrensschritt der Rohrschellenbügel nach Ausrichtung des mindestens einen Stützelements zur gewünschten Position verschoben und ggf. fixiert werden.

Gemäss einer Ausführungsform weist das Verfahren zusätzlich folgenden Vorbereitungsschritt aufweist:
c. ausbilden von mindestens einem Schnitt in einem Rohling, wodurch die Basisplatte teilweise von dem Stützenelement getrennt wird.

Gemäss diesem Verfahrensschritt wird das Stützelement hergestellt, wobei der mindestens eine Schnitt mittels Stanzen, Laserschneiden oder Wasserstrahlschneiden oder einem anderen spanbildendem Fertigungsverfahren ausgebildet wird. Es können auch zusätzlich Entlastungsschnitte eingebracht werden, damit die Biegebewegung vorteilhaft einfach durchgeführt werden kann. Zudem können mittels eines der oben genannten Fertigungsverfahrens zusätzlich Schnitte für das Ausbilden der Öffnungen der Montagestruktur, der Rastöffnungen, der Rastausnehmungen etc. ausgebildet werden. Das einteilige Bauteil aufweisend die Basisplatte und das Stützelement und sämtliche Öffnungen, Biegekanten etc., kann beispielsweise mittels einem Stanzvorgang hergestellt werden. In einem nachfolgendem Schritt können beispielsweise die Seitenschenkel der Basisplatte und die Seitenschenkel des Stützelements in ihre finale Position gebogen werden. Anschliessend werden sie auf die Baustelle transportiert. Es ist zudem denkbar, dass in einem weiteren Verfahrensschritt die Seitenschenkel zur Stütze gebogen werden und die fertige Rohrhalterung aufweisend die senkrecht zur Basisplatte gebogene Stütze auf die Baustelle transportiert wird. Die Rohrhalterung kann also in einem ungebogenen Zustand des Stützelements oder in einem gebogenen / finalen Zustand des Stützelements (Stütze) angeboten werden.

### KURZE ERLÄUTERUNG DER FIGUREN

Anhand der in den nachfolgenden beispielhaften Figuren gezeigten Ausführungsbeispiele und der dazugehörigen Beschreibung werden Aspekte der Erfindung näher erläutert. Es zeigen:
- **Fig. 1**: eine Draufsicht einer ungebogenen / unausgerichteten Rohrhalterung gemäss einer ersten Ausführungsform;
- **Fig. 2**: eine erste perspektivische Ansicht der ungebogenen / unausgerichteten Rohrhalterung gemäss der ersten Ausführungsform und eine perspektivische Ansicht der gebogenen / ausgerichteten Rohrhalterung gemäss der ersten Ausführungsform;
- **Fig. 3**: eine erste Seitenansicht der gebogenen / ausgerichteten Rohrhalterung gemäss der ersten Ausführungsform;
- **Fig. 4**: eine zweite Seitenansicht der gebogenen / ausgerichteten Rohrhalterung gemäss der ersten Ausführungsform;
- **Fig. 5**: eine zweite perspektivische Ansicht der gebogenen / ausgerichteten Rohrhalterung gemäss der ersten Ausführungsform;
- **Fig. 6**: eine perspektivische Ansicht eines Details B1 der gebogenen / ausgerichteten Rohhalterung gemäss der ersten Ausführungsform, wobei das Detail B1 eine erste Variante eines Rastelements darstellt;
- **Fig. 7**: eine perspektivische Ansicht eines Details B2 der gebogenen / ausgerichteten Rohhalterung gemäss der ersten Ausführungsform, wobei das Detail B2 eine zweite Variante eines Rastelements darstellt;
- **Fig. 8**: eine perspektivische Ansicht eines Details B3 der gebogenen / ausgerichteten Rohhalterung gemäss der ersten Ausführungsform, wobei das Detail B3 eine dritte Variante eines Rastelements darstellt;
- **Fig. 9**: eine Draufsicht einer ungebogenen / unausgerichteten Rohrhalterung gemäss einer zweiten Ausführungsform;
- **Fig. 10**: eine Untersicht der gebogenen / ausgerichteten Rohrhalterung gemäss der zweiten Ausführungsform;
- **Fig. 11**: eine erste perspektivische Ansicht der gebogenen / ausgerichteten Rohrhalterung gemäss der zweiten Ausführungsform;
- **Fig. 12**: eine erste Seitenansicht der gebogenen / ausgerichteten Rohrhalterung gemäss der zweiten Ausführungsform;
- **Fig. 13**: eine zweite Seitenansicht der gebogenen / ausgerichteten Rohhalterung gemäss der zweiten Ausführungsform;
- **Fig. 14**: eine zweite perspektivische Ansicht der gebogenen / ausgerichteten Rohrhalterung gemäss der zweiten Ausführungsform;
- **Fig. 15**: eine perspektivische Ansicht eines Details F der gebogenen / ausgerichteten Rohrhalterung gemäss der zweiten Ausführungsform;
- **Fig. 16**: eine schematische Darstellung eines Ablaufdiagramms eines Verfahrens zur Herstellung einer Rohrhalterung gemäss einer ersten Ausführungsform;
- **Fig. 17-19**: verschiedene Darstellungen einer mehrteiligen Rohrhalterung gemäss einer ersten Ausführungsform;
- **Fig. 20-22**: verschiedene Darstellungen einer mehrteiligen Rohrhalterung gemäss einer zweiten Ausführungsform;
- **Fig. 23-26**: verschiedene Darstellungen einer Rohrhalterung mit Rohrschellenbügel gemäss einer ersten Ausführungsform;
- **Fig. 27-29**: verschiedene Darstellungen einer mehrteiligen Rohrhalterung ohne Rohrschellenbügel gemäss einer zweiten Ausführungsform;
- **Fig. 30-31**: verschiedene Darstellungen einer Rohrhalterung mit Rohrschellenbügel gemäss einer dritten Ausführungsform;
- **Fig. 32-33**: verschiedene Darstellungen einer Rohrhalterung mit Rohrschellenbügel gemäss einer vierten Ausführungsform;
- **Fig. 34-35**: verschiedene Darstellungen einer Rohrhalterung mit Rohrschellenbügel gemäss einer fünften Ausführungsform.

### BESCHREIBUNG DER AUSFÜHRUNGSFORMEN

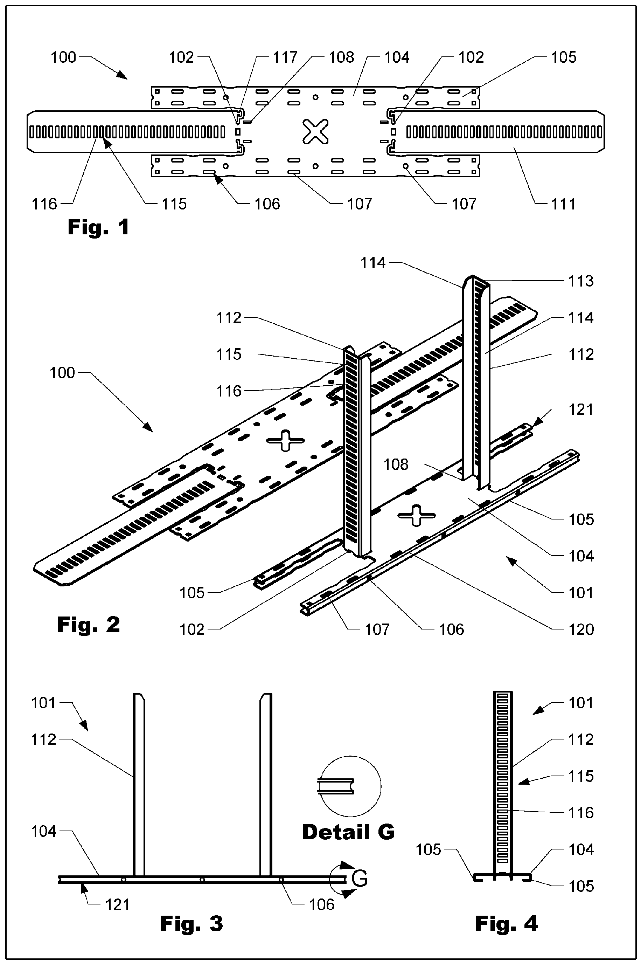

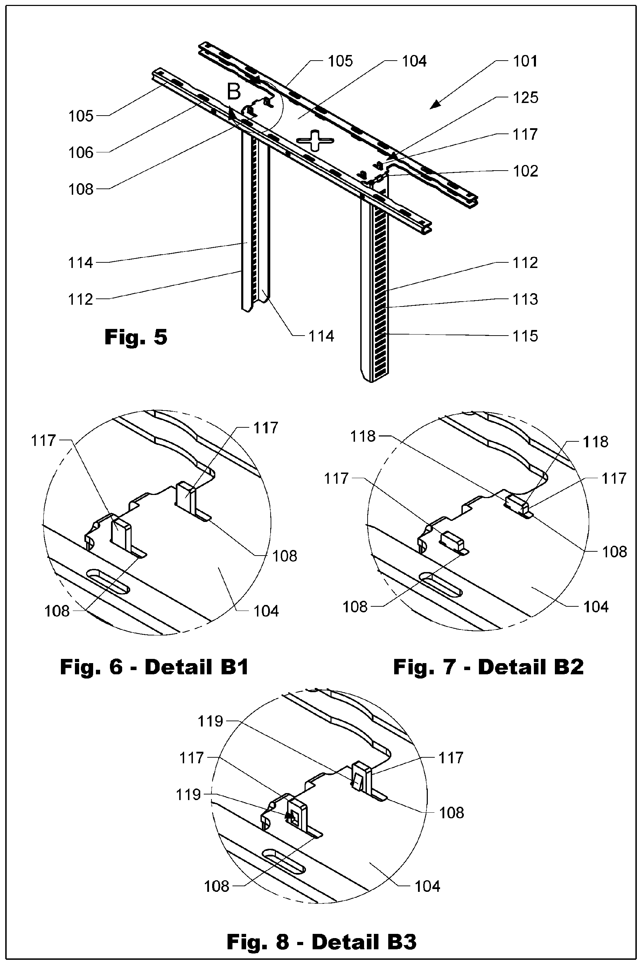

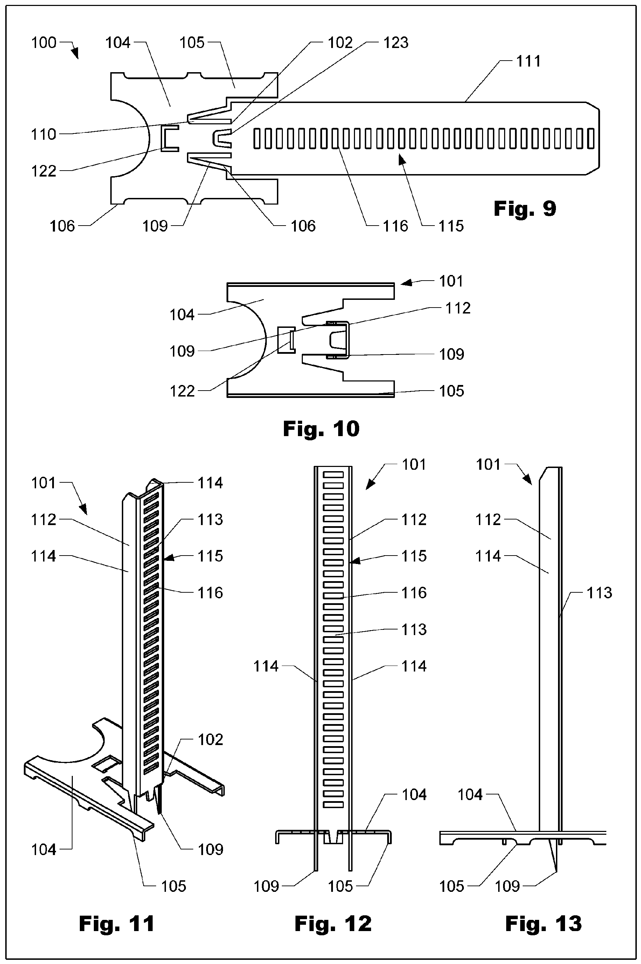

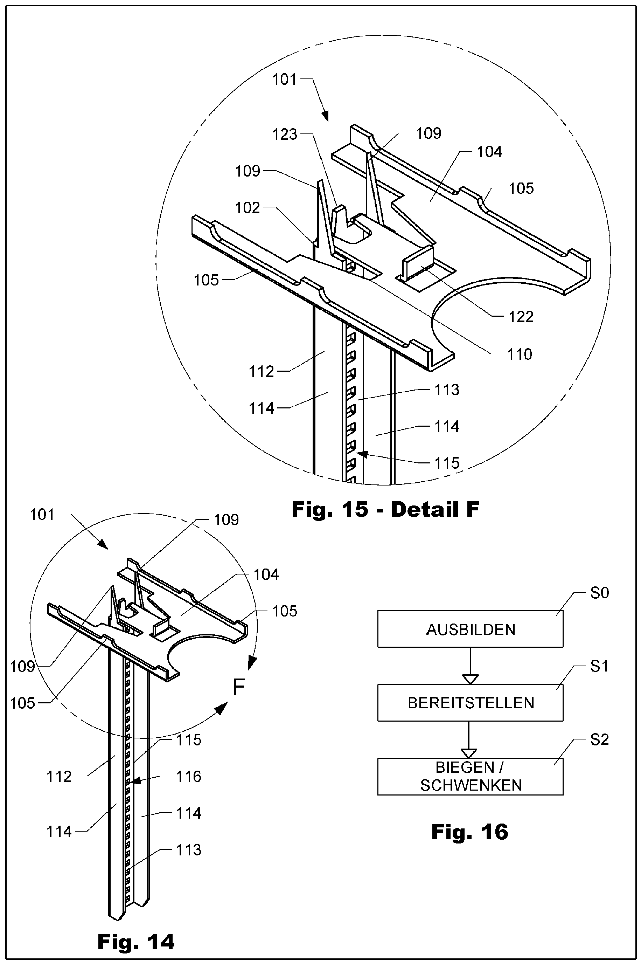

Die **Figuren 1, 2, 3, 4** und **5** zeigen eine erste Ausführungsform der Rohrhalterung 100 gemäss der vorliegenden Offenbarung. Die **Figuren 6, 7** und **8** zeigen verschiedene Varianten eines Details der Rohrhalterung 100 gemäss der ersten Ausführungsform. Die **Figuren 9, 10, 11, 12, 13****,** **14** und **15** zeigen eine zweite Ausführungsform der Rohrhalterung 100 gemäss der vorliegenden Offenbarung. Die **Figur 16** zeigt schematisch ein Ablaufdiagramm 123 welches ein Verfahren zur Herstellung einer Rohrhalterung 100 gemäss der vorliegenden Offenbarung zeigt.

Die **Figur 1** zeigt die Rohrhalterung 100 gemäss der ersten Ausführungsform in ihrem nicht gebogenen / ungebogenen / unausgerichteten Zustand. Die Rohrhalterung 100 kommt beispielsweise in dieser Form aus einem Stanzwerkzeug, welches sämtliche Ausnehmungen in einem Rohling ausgebildet hat, wodurch die Rohrhalterung 100 gebildet ist. Die Rohrhalterung 100, wie dargestellt in Figur 1 zeigt eine Basisplatte 104 und zwei Stützelemente 111, die jeweils einteilig / integral mit der Basisplatte 104 ausgebildet sind. Die Stützelemente 111 sind an Verbindungsbereichen 102, die gleichzeitig Biegekanten 102 bilden, mit der Basisplatte 104 verbunden. Die Basisplatte 104 weist zusätzlich Seitenschenkel 105 auf, die sich seitlich an einer Kante der Basisplatte 104 erstrecken. Die Seitenschenkel 105 können bspw. ein L-Profil oder ein U-Profil ausbilden, indem die Seitenschenkel 105 einmal oder zweimal gebogen werden (gezeigt in Figur 2). Die Basisplatte 104 weist zudem eine Montagestruktur 106 auf, die dazu ausgebildet ist mit einer Basisstruktur, beispielsweise einer Verschalung oder Armierung, verbunden zu werden. Die Montagestruktur 106 weist Öffnungen 107 auf, durch die beispielsweise Befestigungselemente wie Armierungsdrähte, Kabelbinder, Nägel oder Schrauben angebracht werden können. Die Öffnungen 107 können auch in dem Seitenschenkel 105 angebracht sein. Die Öffnungen 107 können auch als sich kreuzende Langlöcher, wie in Figur 1 dargestellt, ausgebildet sein. Die Stützelemente 111 wie in Figur 1 gezeigt weisen jeweils eine Rohrhalterungsstruktur 115 auf, die aus einer Vielzahl von Rastausnehmungen 116 gebildet ist. Die Rohrhalterungsstruktur 115 ist dazu ausgebildet das Rohr aufzunehmen. Die Rastausnehmungen 116 sind beispielsweise parallel angeordnete Langlöcher. Die Figur 1 zeigt zudem Rastöffnungen 108 in der Basisplatte 104, welche jeweils zur Aufnahme eines Rastelements 117 ausgebildet sind. Die Rastelemente 117 sind jeweils an dem der Biegekante 102 zugewandten Ende des Stützelements 111 angeordnet. Die Rastelemente 117 werden gemäss dieser Ausführungsform aus dem Rohteil / Rohling mitausgestanzt. Die Öffnungen 107 dienen zudem der Gewichtsreduktion der Rohrhalterung 100, 101. Die Rastelemente 117 bilden zusammen mit den Rastöffnungen 108 zumindest teilweise eine Arretiervorrichtung 125 zur Arretierung der Stützelemente 111 nach entsprechender Ausrichtung. Die nachfolgend beschriebenen Ausführungsformen zeigen verschiedene Varianten der Arretiervorrichtung 125.

**Figur 2** zeigt in einer perspektivischen Ansicht die Rohrhalterung 100 gemäss Figur 1 in dem ungebogenen und in dem gebogenen / ausgerichteten / finalen Zustand 101. In dem gebogenen Zustand sind die beiden Stützelemente 111 entlang der Biegekante 102 gebogen und formen dadurch die Stützen 112. Zudem ist aus Figur 2 ersichtlich, dass die Stützen 112 aus einem Basisschenkel 113 und zwei Seitenschenkeln 114, die sich parallel zueinander von dem Basisschenkel 113 aus erstrecken, gebildet sind. Die Seitenschenkel 114 werden beispielsweise mittels einer Biegebewegung gebildet. Die Stützen 112 weisen demgemäss ein U-Profil auf. Andere Profile, wie beispielsweise ein L-Profil, T-Profil oder V-Profil sind ebenso denkbar. Die Rohrhalterungsstruktur 115 ist in dem Basisschenkel 113 ausgebildet. Die beiden Stützen 112 weisen jeweils das U-Profil auf, wobei sich die losen Enden der Seitenschenkel 114 gegenüberstehen. Es ist zudem ersichtlich, dass die Rastelemente 117 jeweils in die Rastöffnung 108 eingreifen. Die Basisplatte 104 weist zudem an zwei Kanten einen Seitenschenkel 105 auf, der ebenso Teil der Montagestruktur 106 ist und Öffnungen 107 aufweist. Die Seitenschenkel 105 bilden gemäss dieser Ausführungsform ein U-Profil. Öffnungen 107 sind an beiden Schenkeln des U-Profils überlappend angeordnet, sodass ein Befestigungselement wie beispielsweise ein Nagel oder ein Draht durch beide Öffnungen 107 geführt werden kann.

Der Abstand der beiden Schenkel des U-Profil entspricht gemäss einer Ausführungsform mindestens der Dicke eines Armierungseisens, sodass das entsprechende Armierungseisen in das U-Profil eingreifen kann. Dadurch kann die Basisplatte 104 vorteilhaft einfach und stabil mit der Basisstruktur, bspw. der Armierung, befestigt werden.

Gemäss einer anderen Ausführungsform bildet das Profil der beiden Seitenschenkel 105 jeweils eine Schiene 121, in welche zusätzliche Elemente eingeführt werden können. Diese zusätzlichen Elemente können eine U-Form aufweisen und sich von einem Seitenschenkel 105 zu dem anderen Seitenschenkel 105 der Basisstruktur 104 erstrecken und in beide Schienen 121 eingreifen. An dem zusätzlichen Element können Verlängerungen angebracht sein, die bspw. grössere Abstände zwischen Armierungseisen überbrücken können. Die zusätzlichen Elemente können mit Rasterungsstrukturen in den jeweiligen Seitenschenkeln 105 zur Befestigung einrasten. In einer anderen Ausführungsform können die zusätzlichen Elemente mit den Seitenschenkeln 105 mittels der Öffnungen 106 verschraubt werden.

Figur 2 zeigt, dass die beiden Stützen 112 parallel zueinander mit einem vordefinierten Abstand zueinander ausgerichtet sind. In einer anderen Ausführungsform sind die beiden oder mehrere Stützen 112 versetzt zueinander angeordnet und ausrichtbar.

In einer anderen nicht dargestellten Ausführungsform wird die Stütze mittels des Stützelements 111 und eines Verbindungselements gebildet, welches mit dem Stützelement 111 verbunden ist. Das Verbindungselement ist beispielsweise eine Verlängerung des Stützelements 111, aufweisend dasselbe Profil. Das Verbindungselement ist beispielsweise mit dem Stützelement 111 verschraubbar, verschweissbar oder einrastbar.

Figur 2 zeigt zudem, dass die der Biegekante 2 zugewandten Enden der Seitenschenkel 114 der Stütze 112 jeweils in Kontakt mit der Basisplatte 104 sind. Dieser Kontaktbereich ist demgemäss ein Anschlag für die Seitenschenkel 114 der Stütze 112, sodass die Stütze 112 nicht weiter als vordefiniert gebogen werden kann. Der Winkel der Kontaktfläche der Seitenschenkel 114 zur Basisplatte 104 definiert den maximalen Biegewinkel / Ausrichtwinkel.

Die Länge (Höhe) der Stützen 112 liegt gemäss einer Ausführungsform in einem Bereich von 160 mm bis 600 mm. Die angegebene Höhe der Stützen 112 kann sich aus dem Stützelement 111 alleine, oder aus dem Stützelement 111 und einem oder mehreren der Verbindungselemente zusammensetzen. Dementsprechend kann das Stützelement 111 lediglich eine Höhe aufweisen, die in einem Bereich von 20 mm bis 100 mm liegt. Die restliche Höhe wird durch das Verbindungselement definiert. Der Abstand der beiden Stützen 112 voneinander liegt gemäss einer Ausführungsform in einem Bereich von 125mm bis 315 mm bei einer Toleranz von plus minus 5 mm, insbesondere beträgt der Abstand 125 mm oder 160 mm, plus minus 5 mm.

Gemäss einer weiteren nicht gezeigten Ausführungsform weist die Basisplatte 104 mindestens eine Versteifungssicke auf, die sich bevorzugt parallel zu den längeren Kanten der Basisplatte erstreckt.

In einer anderen nicht dargestellten Ausführungsform weist die Rohrhalterung 101 zusätzlich eine Stützstrebe auf, die zwischen der Stütze 112 und der Basisplatte 104 zur Stabilisierung angeordnet ist. Die Stützstrebe ist beispielsweise ein zusätzliches Bauteil, welches an der Stütze 112 an einer vordefinierten Höhe und an der Basisplatte 104 an einer vordefinierten Stelle angeordnet, bspw. verschraubt oder verschweisst werden kann. Die Stützstrebe kann beispielsweise auch ein Draht sein.

Aus der Figur 2 ist zudem vorteilhaft ersichtlich, dass die Basisplatte 104 zusammen mit den vier Seitenschenkeln 105 eine H-Form bildet. Weitere nachfolgend beschriebenen Ausführungsformen weisen ebenso eine H-Form auf.

**Figur 3** zeigt eine Seitenansicht der Rohrhalterung 106 in dem finalen gebogenen Zustand, nachdem also die Stützelemente 111 zur Stütze 112 gebogen wurden. Figur 3 zeigt vorteilhaft Öffnungen 106 in dem Seitenschenkel 105 der Basisplatte. Der Seitenschenkel 105 kann beispielsweise als Anschlag dienen, der gegen eine Leiste der Verschalung ausgerichtet wird. Mittels der Öffnungen 106 kann ein Befestigungselement in die Leiste zur Montage der Rohrhalterung 101 eingebracht werden.

Figur 3 zeigt in dem Detail G zudem, dass die Enden der Seitenschenkel 105 eine konkave Vertiefung / Rundung aufweisen. Der Radius der Rundung entspricht beispielsweise im Wesentlichen dem Radius von Armierungseisen, sodass die Rundung in den Armierungseisen zur Befestigung der Basisplatte 104 eingreifen kann. Das Ende der Seitenschenkel 105 kann zudem mit dem Armierungseisen verschweisst oder mittels eines Armierungsdrahts verbunden werden.

**Figur 4** zeigt eine weitere Seitenansicht der Rohrhalterung 101, wobei insbesondere die Rastausnehmungen 116 der Rohrhalterungsstruktur 115 ersichtlich sind. Die Rastausnehmungen 116 sind gemäss dieser Ausführungsform Langlöcher. Zudem zeigt Figur 4 die U-Profile der Seitenschenkel 105 der Basisplatte 104. Die U-Profile sind durch die Basisplatte 104 selbst, durch einen senkrecht zur Basisplatte 104 gebogenen ersten Schenkel des Seitenschenkels 105 und einen weiteren senkrecht zu dem ersten Schenkel gebogenen zweiten Schenkel des Seitenschenkels 105 gebildet.

Gemäss einer anderen nicht in den Figuren dargestellten Ausführungsform können die durch die Seitenschenkel 105 und die Basisplatte ausgebildeten Schienen 121 Kopplungselemente aufnehmen, die zwei oder mehrere Rohrhalterungen 100, 101 miteinander verbinden. In anderen Worten, eine erste Rohrhalterung 101 aufweisend eine Basisplatte 104 und eine einzige Stütze 112 kann mittels des Kopplungselements mit einer zweiten Rohrhalterung 101 aufweisend eine Basisplatte 104 und eine einzige Stütze 112 miteinander verbunden werden. Das Kopplungselement verbindet dementsprechend die beiden Rohrhalterungen 101 indem es jeweils in die durch die Seitenschenkel 105 bereitgestellten Schienen 125 eingeführt wird. Dadurch können zwei Rohrhalterungen 101 aufweisend jeweils eine einzige Stütze 112 vorteilhaft einfach zueinander, bevorzugt parallel oder versetzt zueinander, ausgerichtet werden. Das Kopplungselement und / oder die Seitenschenkel 105 können bspw. Rastelemente oder andere Verbindungselement / Öffnungen zur genauen Positionierung aufweisen.

Gemäss einer weiteren nicht in den Figuren dargestellten Ausführungsform ist die Basisplatte 104 dazu ausgebildet mindestens eine Erdstütze oder Erdsonde aufzunehmen, die dazu eingerichtet ist in ein Erdreich eingeschlagen / eingebracht zu werden. Mittels der Erdstützen kann die Rohrhalterung 100, 101 vorteilhaft in dem Erdreich verankert werden, bspw. für den Fundamentbau. Die Erdstütze kann beispielsweise an der Montagestruktur 106, insbesondere an den Öffnungen 107, befestigt werden. Gemäss einer weiteren Ausführungsform kann die Erdstütze in die durch die Seitenschenkel 105 gebildete Schiene 121 eingeführt werden.

**Figur 5** zeigt die Rohrhalterung 101 wie in den Figuren 2-4 dargestellt perspektivisch von unten. Figur 5 zeigt insbesondere, dass die Rastelemente 117 in den jeweiligen Rastöffnungen 108 eingreifen, wodurch die Stützen 112 stabilisiert werden. Die Figur 5 zeigt zudem das Detail B, welches in den folgenden Absätzen näher beschrieben wird.

**Figur 6** zeigt eine erste Variante B1 des Rastelements 117. Das Rastelement 117 weist eine längliches Querschnittsprofil auf, welches im Wesentlichen eine Verlängerung des Seitenschenkels 114 der Stütze 112 ist. Die Rastöffnung 108 ist ein Langloch, durch welches das Rastelement 117 während der Biegebewegung des Stützelements 111 durchgeführt werden kann. Mittels eines Hammerschlags oder einer ähnlichen mechanischen Bewegung kann mindestens eines der Rastelemente 117 umgebogen werden, wodurch eine formschlüssige Verbindung zwischen dem Rastelement 117 und der Basisplatte 104 realiserbar ist. Dadurch wird die Stütze 112 stabilisiert. Es ist auch denkbar, dass das Rastelement 117 eine Öffnung aufweist, durch die ein Verbindungsmittel, beispielsweise eine Schraube oder ein Armierungsdraht, geführt werden kann, wodurch ebenso eine formschlüssige Verbindung realiserbar ist.

**Figur 7** zeigt eine zweite Variante B2 des Rastelements 117. Das Rastelement 117 weist ein ähnliches Querschnittsprofil wie in Variante B1 auf, allerdings weist das Rastelement 117 an seinem Ende jeweils zwei seitliche Vorsprünge 118 auf. Die seitlichen Vorsprünge 118 sind beispielsweise durch Ausnehmungen / Vertiefungen in dem Rastelemente 117 ausgebildet. Die seitlichen Vorsprünge 118 weisen derartige geometrischen Ausmasse auf, die es erlauben, dass die seitlichen Vorsprünge vollständig durch die Rastöffnung 108 durchgeführt werden können. Anschliessen kann beispielsweise mittels einer Biegebewegung ein Formschluss durch umbiegen der seitlichen Vorsprünge 118 realisiert werden. Alternativ oder zusätzlich kann mittels einer Rotationsbewegung mindestens eines der seitlichen Vorsprünge 118 der Formschluss realisiert werden. Die kann beispielsweise mittels einer Zange durchgeführt werden, die an mindestens einem der seitlichen Vorsprünge 118 angreift und relativ zur Basisplatte 104 rotiert wird.

**Figur 8** zeigt eine dritte Variante B3 des Rastelements 117. Das Rastelement 117 weist ein ähnliches Querschnittsprofil wie in Variante B1 auf. Allerdings weist das Rastelement 117 zudem jeweils eine Rastnase 119 auf, die beispielsweise mittels eines Stanzschritts ausgebildet ist. Die Rastnase 119 weist die Form eines dreieckigen Prismas auf. Das Rastelement 117 weist eine im Wesentlichen senkrecht zur Haupterstreckungsebene des Rastelements 117 ausgebildete erste Fläche und eine im Wesentlichen unter einem spitzen Winkel, bspw. kleiner gleich 30°, ausgebildete zweite Fläche auf. Dementsprechend ist das spitze dreieckige Prisma gebildet. Die Rastöffnungen 108 weisen mindestens eine Öffnungsbreite auf, die der maximalen Dicke des Rastelements 117 an der Stelle der Rastnase 119 entspricht. Während der Biegebewegung des Stützelements 111 greifen die jeweiligen Rastelemente 117 in die Rastöffnungen 108 ein, dabei werden die zweiten Flächen der Rastelemente 117 an einer Seitenfläche der Rastöffnungen 108 entlanggeschoben, wodurch eine elastische Verformung der Rastelement 117 resultiert. Sobald die Rastnasen 119 vollständig durch die Rastöffnungen 108 geführt sind, springt das Rastelement 117 von der elastischen Verformung in seine Ruheposition zurück. Dabei wird ein Formschluss zwischen der zweiten Fläche der jeweiligen Rastnasen 119 und der Oberfläche der Basisplatte 104 gebildet, der die Stützen 112 stabilisiert. Diese Variante ermöglich eine vorteilhaft einfache automatische Ausbildung des Formschlusses.

Eine Kombination der Varianten B1, B2 und B3 oder anderer Ausführungsformen des Rastelements ist ebenso möglich.

**Figur 9** zeigt die Rohrhalterung 100 gemäss der zweiten Ausführungsform in ihrem ungebogenen / unausgerichteten Zustand. Die Rohrhalterung 100 wie dargestellt in Figur 9 wurde beispielsweise mittels Stanzens oder Schneidens (bspw. Laserstrahlschneidens) aus einem Rohling hergestellt. Figur 9 zeigt, dass die Basisplatte 104 einteilig mit dem Stützelement 111 ausgebildet ist. Zwischen Basisplatte 104 und dem Stützelement 111 in dem Verbindungsbereich 102 ist eine Biegekante 102 / Sollbiegekante vorgesehen, um welche die Biegebewegung durchgeführt wird, wodurch das Stützelement 111 senkrecht zur Basisplatte 104 ausgerichtet werden kann und dadurch die Stütze 112 (dargestellt in Figur 11) bildet. Figur 9 zeigt zudem die Montagestruktur 106 der Basisplatte 104. Die Montagestruktur 106 wird einerseits durch Vorsprünge an zwei seitlichen Kanten der Basisplatte 104 gebildet, die mittels einer Biegung zu einem Seitenschenkel 105 der Basisplatte umgebogen werden können (dargestellt in Figur 11). Die Vorsprünge bilden eine Auflagefläche für die Basisplatte 104, auf welcher die Basisplatte beispielsweise auf der Verschalung oder auf Armierungseisen aufgesetzt werden kann. Die Seitenschenkel 105 ermöglichen zudem, dass beim Vergiessen des Betons der Beton auch unter die Basisplatte 104 eindringen kann, wodurch die Fläche der Basisplatte 104, die nach Entfernung der Verschalung sichtbar bleibt, und ggf. mittels Zinkspray behandelt werden muss, reduziert wird. Diesen Zweck erfüllen auch die Seitenschenkel 105 der ersten Ausführungsform, gezeigt in den Figuren 1 bis 4.

Zudem wird die Montagestruktur 106 durch zwei spitzförmige Vorsprünge 109 gebildet, die jeweils durch ein spitz zulaufendes Schlitzpaar 110 ausgeformt sind. Die spitzförmigen Vorsprünge 109 sind gemäss dieser Ausführungsform mit dem Stützelement 111 verbunden, wodurch durch die Biegebewegung des Stützelements 111 die spitzförmigen Vorsprünge 109 senkrecht zur Basisplatte 104 ausgerichtet werden. Die ausgerichteten spitzförmigen Vorsprünge 109 können in eine Verschalung zur Montage der Rohrhalterung 101 eingeschlagen werden.

Die spitzförmigen Vorsprünge 109 weisen gemäss einer Ausführungsform eine Sollbruchstelle, insbesondere auf der Höhe der maximalen Einschlagtiefe, auf. An der Sollbruchstelle kann die aus dem fertigen Betonbauteil herausragende Spitze abgebrochen werden. Figur 9 zeigt, dass die Rohrhalterung 100 lediglich zwei spitzförmige Vorsprünge 109 aufweist, sodass je Rohrhalterung 100 vorteilhaft lediglich zwei aus dem fertigen Betonbauteil herausragende Spitzen abgeschlagen werden müssen.

Gemäss einer weiteren Ausführungsform (nicht in den Figuren gezeigt), weist die Basisplatte 104 zusätzlich oder alternativ mindestens ein spitz zulaufendes Schlitzpaar auf, welches spitzförmige Vorsprünge an einer anderen Stell der Basisplatte 104 bildet. Diese spitzförmigen Vorsprünge sind dazu ausgebildet mittels einer Biegebewegung (bspw. mindestens einem Hammerschlag) senkrecht oder unter einem Winkel zur Basisplatte 104 ausgerichtet zu werden. Dadurch können auch diese spitzförmigen Vorsprünge in die Verschalung eingeschlagen werden.

Figur 9 zeigt zudem eine Lasche 122, die ebenso umgebogen werden kann und beispielsweise als Anschlag für ein Armierungseisen dienen kann. Figur 9 zeigt zudem einen Entlastungsschnitt 123 angeordnet im Verbindungsbereich 102, wodurch die Biegebewegung vorteilhaft einfach durchgeführt werden kann.

**Figur 10** zeigt die Rohrhalterung 101 gemäss der zweiten Ausführungsform in der Untersicht in ihrem finalen gebogenen Zustand, nachdem also das Stützelement 111 mittels der Biegebewegung senkrecht zur Basisplatte 104 ausgerichtet wurde und dadurch die Stütze 112 gebildet ist. Figur 10 zeigt insbesondere vorteilhaft die umgebogenen Seitenschenkel 105 der Basisplatte. Zudem ist das U-Profil der Stütze 112 ersichtlich. Die Stütze 112 weist zudem die spitzförmigen Vorsprünge 109 auf, die in Figur 10 aus der Bildebene herausragen. Ausserdem ist aus Figur 10 die umgebogenen Lasche 122 ersichtlich.

**Figur 11** zeigt die gebogene Rohrhalterung 101 gemäss der zweiten Ausführungsform in einer perspektivischen Darstellung. Hierbei ist die senkrechte Ausrichtung der Stütze 112 zur Basisplatte 104 ersichtlich. Die Stütze 112 weist einen Basisschenkel 113 und zwei seitlich angeordnete Seitenschenkel 114 auf, die zusammen das U-Profil der Stütze 112 bilden. Die Stütze 112 weist zudem als Rohrhalterungsstruktur 115 Rastausnehmungen 116 auf, an denen das Rohr befestigt werden kann. Die Basisplatte 104 weist jeweils an zwei seitlichen Kanten die Seitenschenkel 105 auf. Diese werden durch drei Vorsprünge gebildet zwischen denen zwei Ausnehmungen / Nuten angeordnet sind. Die Ausnehmungen dienen eine verbesserten Montierbarkeit auf der Verschalung und / oder Armierung. Aus Figur 11 sind zudem die spitzförmigen Vorsprünge 109 ersichtlich, die an dem der Biegekante 102 zugewandten Ende der Seitenschenkel 114 der Stütze 112 angeordnet sind. Die spitzförmigen Vorsprünge 109 oder Spitzen können vorteilhaft in eine Verschalung eingeschlagen werden indem die Rohrhalterung 101 auf die Verschalung an der gewünschten Stelle aufgesetzt wird und einer oder mehrere Hammerschläge auf die Stütze 112 aufgebracht werden.

**Figur 12** zeigt die gebogene Rohrhalterung 101 gemäss der zweiten Ausführungsform in einer Seitenansicht. Hierbei sind insbesondere dir Rastausnehmungen 116 der Rohrhalterungsstruktur 115 an der Stütze 112 ersichtlich. Ausserdem ist ersichtlich, dass die spitzförmigen Vorsprünge 109 eine sich weiter senkrecht zur Basisplatte 104 erstrecken, als die Seitenschenkel 105 der Basisplatte 104. Dementsprechend können die spitzförmigen Vorsprünge 109 um dieses Delta in die Verschalung eingeschlagen werden, bis also auch die Seitenschenkel 105 der Basisplatte 104 die Verschalung kontaktieren. Die spitzförmigen Vorsprünge 109 und die Seitenschenkel 105 der Basisplatte 104 bilden dementsprechend die Montagestruktur 106.

**Figur 13** zeigt ebenso die gebogene Rohrhalterung 101 gemäss der zweiten Ausführungsform in einer zweiten Seitenansicht. Hierbei ist insbesondere der Seitenschenkel 114 der Stütze 112 ersichtlich, dessen Verlängerung durch die Basisplatte 104 die spitzförmigen Vorsprünge 109 bildet (siehe auch Figur 12). Figur 13 zeigt zudem die umgebogene Lasche 122 und einen mit der Stütze 112 gebogenen Teil des Entlastungsschnitts 123. Die Lasche 122 und der umgebogene Teil des Entlastungsschnitts 123 können beispielsweise einen Anschlag für die Rohrhalterung 101 bilden, der an einem Armierungseisen oder an einer Leiste in der Verschalung anliegt. Aus Figur 13 ist zudem gut ersichtlich, dass durch die Ausnehmungen in den Seitenschenkeln 105 der Basisplatte 104 Armierungseisen durchgeführt werden können, bzw. diese Ausnehmungen auf Armierungseisen aufgelegt werden können, wodurch die Basisplatte 104 vorteilhaft an der Basisstruktur (Verschalung und Armierungseisen) aufgelegt und befestigt werden kann.

**Figur 14** zeigt eine perspektivische Darstellung der gebogenen Rohrhalterung 101 gemäss der zweiten Ausführungsform. Zudem ist in Figur 14 das Detail F dargestellt, welches in Figur 15 vergrössert dargestellt ist. Die Figur 14 unterscheidet sich lediglich in der Ausrichtung der Rohrhalterung von der Figur 11, auf welche hiermit verwiesen ist. Im Folgenden wird auf die Figur 15 im Detail eingegangen.

**Figur 15** zeigt in einer perspektivischen Darstellung das Detail F der gebogenen Rohrhalterung 101 gemäss der zweiten Ausführungsform. Hierbei ist insbesondere die Basisplatte 104 im Detail dargestellt. Die Basisplatte 104 weist an zwei seitlichen Kanten jeweils den Seitenschenkel 105 auf, der jeweils durch drei Vorsprünge gebildet ist, die senkrecht zur Haupterstreckungsebene der Basisplatte 104 ausgerichtet sind. Zwischen den drei Vorsprüngen sind die zwei Ausnehmungen / Nuten vorgesehen. An einer weiteren Kante der Basisplatte ist eine halbkreisförmige Ausnehmung zur Gewichtsreduktion vorgesehen. Zudem ist die umgebogene Lasche 122 gut ersichtlich. Die Stütze weist ein U-Profil auf, welches durch den Basisschenkel 113 und die beiden Seitenschenkel 114 gebildet ist. Die Rohrhalterungsstruktur 115 wird durch die länglichen parallel angeordnetem Rastausnehmungen 116 gebildet. Die spitzförmigen Vorsprünge 109 erstrecken sich von den Seitenschenkeln 114 der Stütze 112 aus. Zudem ist der umgebogene Teil des Entlastungsschnitts 123 gut ersichtlich. In der Basisplatte 104 sind zudem die Ausnehmungen welche ursprünglich das Stützelement 112 gebildet haben gut ersichtlich, insbesondere auch Restelemente des spitz zulaufenden Schlitzpaars 110.

Aus den Figuren 9 bis 11 ist ersichtlich, dass die Stütze 112 allein durch das Stützelement 111 gebildet ist, indem das Stützelement 111 mittels der Biegebewegung senkrecht zur Basisplatte 104 ausgerichtet wird. Gemäss einer anderen nicht gezeigten Ausführungsform kann die Stütze 112 auch durch das Stützelement 111 und dem Verbindungselement gebildet sein, welches mit dem Stützelement 111 verbunden ist. Das Verbindungselement weist beispielsweise dasselbe Profil wie das Stützelement 111 auf und ist dementsprechend eine Verlängerung des Stützelements 111. Das Verbindungselement ist beispielsweise an dem Stützelement 111 verschraubt, verschweisst oder anderweitig mit dem Stützelement 111 verbunden.

**Figur 16** zeigt ein Ablaufdiagramm eines Verfahrens zur Herstellung der Rohrhalterungsstruktur 101 gemäss einer ersten Ausführungsform. Das Verfahren weist die Schritte Ausbilden S0, Bereitstellen S1 und Schwenken / Biegen S2 auf.

In dem Vorbereitungsschritt S0 wird mittels mindestens einem Schnitt in einem Rohling die Basisplatte 104 und das einteilig mit der Basisplatte 104 ausgebildete Stützelement 111 ausgebildet. Eine mehrteilige Ausführung ist ebenso denkbar. Mehrere Schnitte sind ebenso denkbar. Das Ausbilden kann beispielsweise mittels eines Fertigungsverfahrens wie Stanzen, Fräsen, Schneiden (Laserschneiden, Wasserstrahlschneiden) etc. erfolgen. Der Rohling ist beispielsweise ein Blechrohling, welcher mittels einer Stanzmaschine zu der ungebogenen Rohrhalterung 100 ausgeformt wird.

In dem Schritt Bereitstellen S1, wird die ungebogene Rohrhalterung 100 aufweisend die Basisplatte 104 und das einteilig mit der Basisplatte 104 ausgebildete Stützelement 111, beispielsweise auf einer Baustelle zur Verwendung bereitgestellt.

In dem Schritt Schwenken / Biegen S2, wird das mindestens eine Stützelement 111 mittels einer Biegebewegung und / oder Schwenkbewegung, insbesondere senkrecht, zur Basisplatte 104 ausgerichtet, wodurch das dadurch ausgerichtete Stützelement 111 eine Stütze 112 der Rohrhalterung 101 zur Befestigung mindestens eines Rohrs bildet.

In weiteren Verfahrensschritten können zusätzliche Elemente in der Rohrhalterung 100, 101 eingebracht werden. Es können beispielsweise die Öffnungen 107, die Rastöffnung 108, die Rastausnehmungen 116 und / oder das spitz zulaufende Schlitzpaar 110 eingebracht werden. Zudem können die Seitenschenkel 105 der Basisplatte mittels einer Biegebewegung ausgerichtet werden. Zudem können in einem weiteren Schritt die Seitenschenkel 114 der Stütze 112 zu dem Basisschenkel 113 mittels einer Biegebewegung ausgerichtet werden, wodurch das gewünschte Profil der Stütze 112 gebildet wird. Alle vorgenannten Schritte können beispielsweise am Verwendungsort der Rohrhalterung 100, 101 und / oder am Herstellungsort der Rohrhalterung 100 durchgeführt werden. Die Reihenfolge der vorgenannten Verfahrensschritte kann variieren.

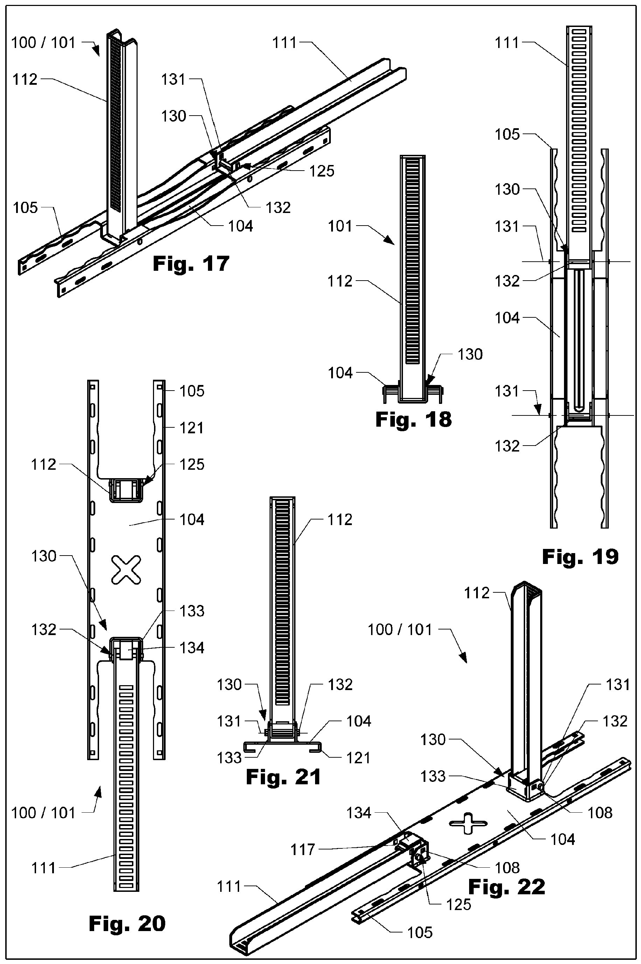

Die **Figuren 17** bis **19** zeigen verschiedene Darstellungen einer mehrteiligen Rohrhalterung 100, 101 gemäss einer ersten Ausführungsform. Die Rohrhalterung 100 weist die Basisplatte 104 und Stützelemente 111 auf, welche schwenkbar mit der Basisplatte 104 verbunden sind. Die Stützelemente 111 sind mittels einer Schwenkvorrichtung 130 an der Basisplatte 104 schwenkbar, ausrichtbar befestigt. Die Schwenkvorrichtung 130 gemäss dieser Ausführungsform umfasst eine Schwenkwelle 132, welche die Basisplatte 104 mit den Stützelementen 111 um eine Schwenkachse 131 schwenkbar verbindet. Die Schwenkwelle 132 ist beispielsweise ein Stift, der durch entsprechend umgeformte Bereiche der Basisplatte 104 und der Stützelemente 111 geführt ist. Mittels der Schwenkbewegung sind die Stützelemente 111 zu den Stützen ausbildbar. Die Stützelemente 111 können zudem Rastelemente aufweisen, damit die Stützen 112 in die gewünschte Position einrasten können. Die Arretiervorrichtung 125 kann gemäss dieser Ausführungsform auch ein einschiebbarer Bolzen sein.

Die **Figuren 20** bis **22** zeigen verschiedene Darstellungen einer mehrteiligen Rohrhalterung 100, 101 gemäss einer zweiten Ausführungsform. Die Basisplatte 104 dieser Ausführungsform entspricht im Wesentlichen der Basisplatte 104 gezeigt in den Figuren 1 bis 5. Zusätzlich weist die Schwenkvorrichtung 130 dieser Ausführungsform Schwenkaufbauelemente 133 auf, welche auf der Basisplatte 104 angeordnet, insbesondere angeschweisst, sind. Die Schwenkaufbauelemente 133 bilden die Aufnahme für die Schwenkwelle 132. Die Schwenkaufbauelemente 133 weisen zudem Rastöffnungen 108 für Rastelemente 117 der Stützelemente 111 auf.

Die mehrteilige Ausführungen der Rohrhalterung 100 bilden eine Alternative zur einteiligen Ausführungsform. Mehrteilig umfasst insbesondere, dass die Stützelemente 11 lösbar von der Basisplatte 104 sind, dementsprechend also nicht integral ausgebildet sind. Figur 22 zeigt zudem einen Schwenkanschlag 134 als Teil der Schwenkvorrichtung 130, der die maximale Schwenkposition der Stütze 112 definiert.

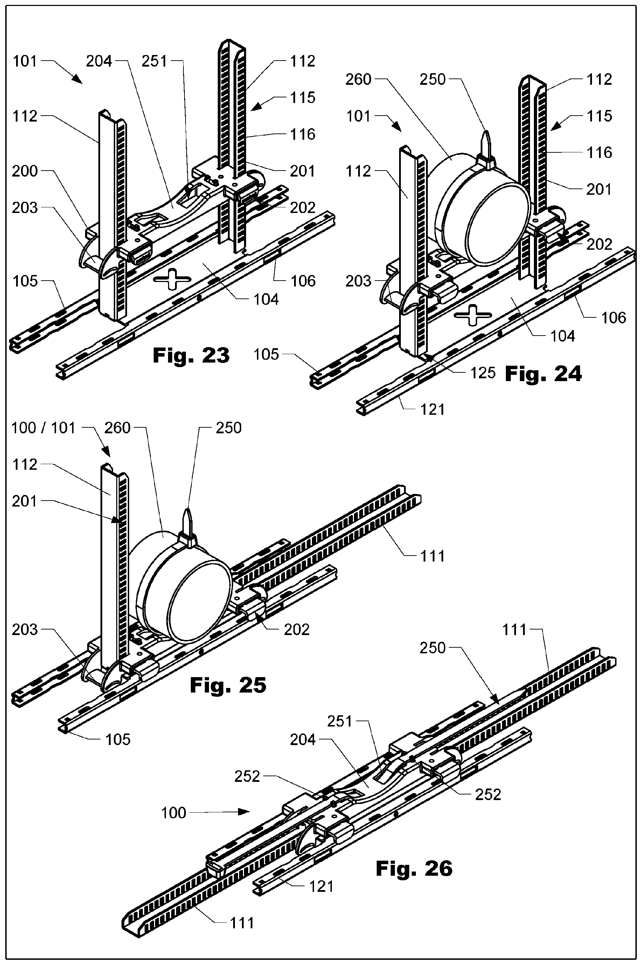

Die **Figuren 23** bis **26** zeigen verschiedene perspektivische Darstellungen einer Rohrhalterung 100, 101 mit einem Rohrschellenbügel 200 gemäss einer ersten Ausführungsform. Die Rohrhalterung 100, 101 entspricht im Wesentlichen der Rohrhalterung 100 gemäss den Figuren 1 bis 5. Zusätzlich ist der Rohrschellenbügel 200 entsprechend angeordnet. Der Rohrschellenbügel 200 kann, wenn die Stützelemente 111 zu den Stützen 112 ausgerichtet sind entlang dieser bewegt und fixiert werden. Die Rohrhalterungsstruktur 115 an den Stützen 112 bildet eine Bügelhöhenverstellvorrichtung 201. Der Rohrschellenbügel 200 weist zudem eine Bügeleinrastvorrichtung 202 auf, die mit der Bügelhöhenverstellvorrichtung 201, insbesondere mit den Rastausnehmungen 116 der Rohrhalterungsstruktur 115 zur Fixierung des Rohrschellenbügel 200 zusammenwirkt. Die Bügeleinrastvorrichtung 202 ist beispielsweise ein innerhalb des Rohrschellenbügels 200 verschiebliches Element, welsches mittels einer Feder in eine der Rastausnehmungen 116 gedrückt wird. Mittels eines Hebels kann das Element aus der Rastausnehmung 116 gedrückt werden, wodurch der Rohrschellenbügel 200 entlang der Stütze 112 verschoben werden kann. Wird der Hebel losgelassen rastet das Element in die nächstgelegene Rastausnehmung 116 wieder ein. Der Rohrschellenbügel 200 weist zudem eine, insbesondere stiftförmige, Bügelhalterung 203 auf, welche bspw. als Griff für ein einfaches Verschieben dient. Der Rohrschellenbügel 200 weist zudem einen Rohrauflagebereich 204 auf, auf welchem ein Rohr 260 vorteilhaft aufgelegt/angebracht werden kann. Der Rohrschellenbügel 200 gemäss dieser Ausführungsform weist zudem eine Führungsöffnung 251 auf, durch welche beispielsweise ein Kabelbinder 250 zur vorteilhaften Fixierung des Rohrs 260 an dem Rohrschellenbügel 200 einfach geführt werden kann.

Die Figur 26 zeigt die Rohrhalterung 100 in dem unausgerichtete Zustand, in welchem die Rohrhalterung 100 mit Rohrschellenbügel 200 bspw. auf die Baustelle geliefert wird. In diesem Zustand kann der Rohrschellenbügel 200 nicht verschoben werden, sondern erst nachdem beide Stützelemente 111 zu Stützen 112 ausgerichtet wurden, kann der Rohrschellenbügel 200 entsprechend verschoben werden, dargestellt bspw. in Figur 24. Figur 26 zeigt zudem die Kompaktheit der Rohrhalterung 100 mit Rohrschellenbügel 200. Die Figur 26 zeigt zudem vorteilhaft eine Kabelbinderhalterung 252, welche den Kabelbinder 250 in einem unbefestigtem Ruhezustand an dem Rohrschellenbügel 200 hält.

Die vorhergehenden und nachfolgenden Ausführungen betreffend den Rohrschellenbügel 200 gelten für alle Ausführungsformen der Rohrschellenbügel 200 und Rohrhalterung 100 entsprechend.

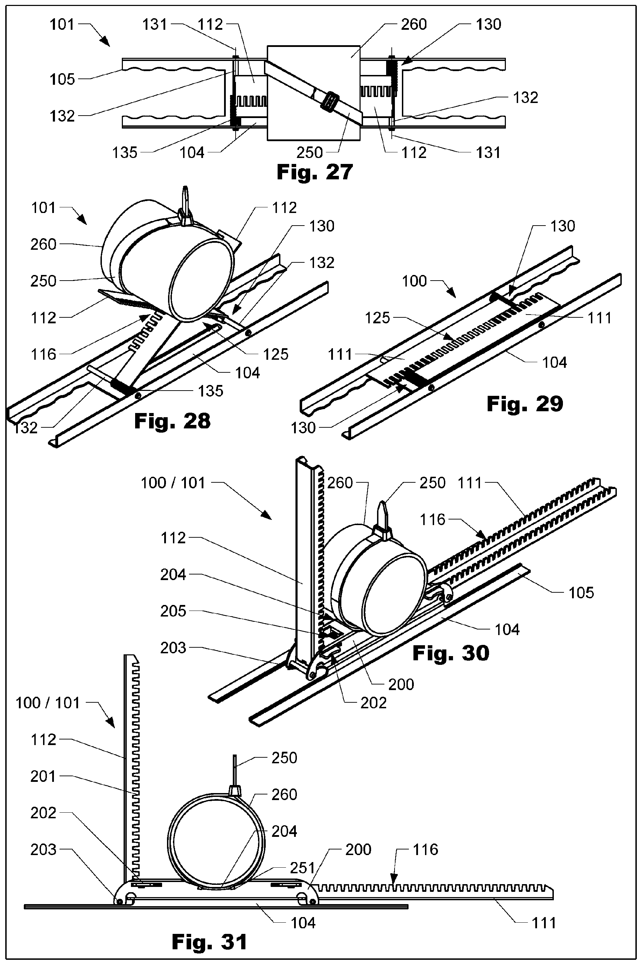

Die **Figuren 27** bis **29** zeigen eine mehrteilige Rohrhalterung 100, 101 ohne Rohrschellenbügel. Beide Stützelemente 111 sind schwenkbar an der Basisplatte 104 angeordnet. Zusätzlich können die Stützelemente 111 gegen die Federkraft einer Schwenkfeder 135 axial entlang der Schwenkwelle 132 verschoben werden, wodurch es ermöglicht wird die Stützelemente 111 zur Stütze auszurichten und von der Ruheposition zu lösen. Andererseits können die Rastausnehmungen 116 der jeweiligen Stützen 112 ineinander eingreifen und dadurch miteinander fixiert werden. Eine axiale Verschiebung gegen die Federkraft der Schwenkfeder 135 entlang der Schwenkwelle 132 ist notwendig, um die Fixierung zu lösen. Diese kreuzartige oder X-artige Anordnung erlaubt, dass das Rohr 260 vorteilhaft einfach ohne Bügel höhenverstellbar angeordnet werden kann. Zur Fixierung kann ein Kabelbinder 250 oder ähnliches verwendet werden. Die Arretiervorrichtung 125 gemäss dieser Ausführungsform wird mittels der Rastausnehmungen 116 der jeweiligen Stützen 112 gebildet.

Die **Figuren 30** bis **31** zeigen verschiedene perspektivische Darstellungen der Rohrhalterung 100, 101, mit Rohrschellenbügel 200 und entsprechend fixiertem Rohr 260 gemäss einer weiteren Ausführungsform. Diese Ausführungsform zeichnet sich durch eine unterschiedliche Ausgestaltung der Bügelhöhenverstellvorrichtung 201 und der Bügeleinrastvorrichtung 202 aus. Die Bügelhöhenverstellvorrichtung 201 ist durch zahnartige Rastausnehmungen 116 gebildet. Die Zähne der Rastausnehmungen 116 erstrecken sich entlang der Seitenschenkel 114 der Stütze 112. Die Bügeleinrastvorrichtung 202 weist ein Einrastelement auf, welches mittels der Federkraft einer Bügelfeder 205 in die Zähne der Rastausnehmungen 116 eingedrückt wird. Zur Verschiebung des Rohrschellenbügels 100 entlang der Stütze 112 muss das Einrastelement gegen die Federkraft der Bügelfeder 205 bewegt werden, wodurch das Einrastelement aus den Zähnen herausgeführt wird und die Bewegung ermöglicht wird.

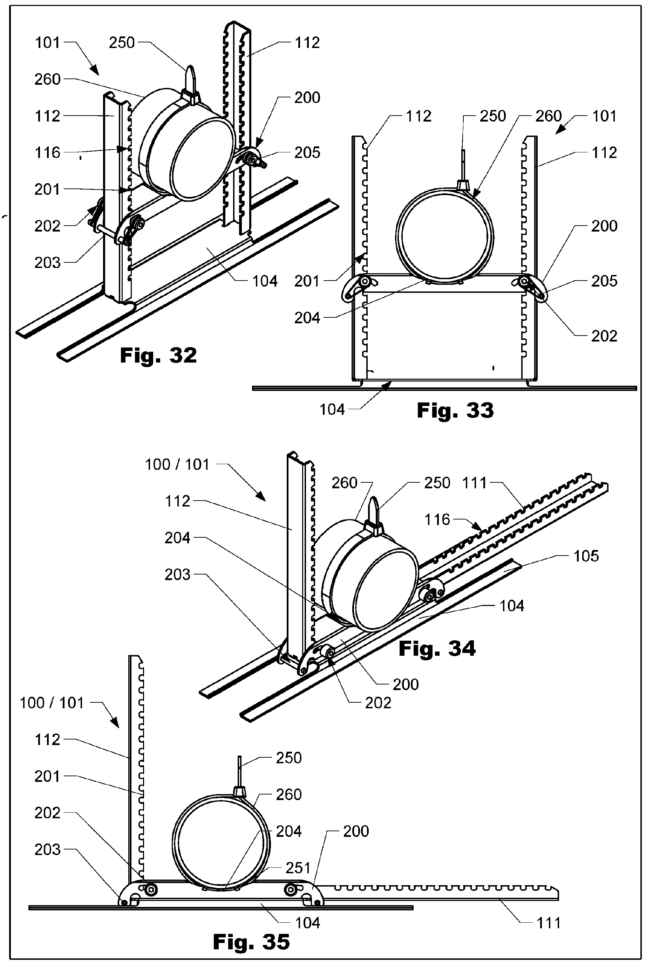

Die **Figuren 32** bis **33** zeigen verschiedene Darstellungen der Rohrhalterung 101, wobei die Stützelemente 112 ähnlich gemäss der Ausführungsform der Figuren 30 bis 31 zahnartige Rastausnehmungen 116 aufweisen. Die Bügeleinrastvorrichtung 202 unterscheidet sich allerdings von der Ausführungsform gemäss Figuren 30 bis 31. Die Bügeleinrastvorrichtung 202 weist einen entlang mindestens eines gekrümmten Langlöchern geführten Stift auf, der mittels der Bügelfeder 205 in die Zähne der Rastausnehmungen 116 gedrückt wird. Die Bügelfeder 205 ist gemäss dieser Ausführungsform ein elastischer Ring, bspw ein Gummiring.

Die **Figuren 34** bis **35** zeigen verschiedene Darstellungen der Rohrhalterung 100, 101, wobei die Stützelemente 112 ähnlich gemäss der Ausführungsform der Figuren 30 bis 33 zahnartige Rastausnehmungen 116 aufweisen. Die Bügeleinrastvorrichtung 202 unterscheidet sich allerdings von der Ausführungsform gemäss Figuren 30 bis 34. Die Bügeleinrastvorrichtung 202 weist einen entlang eines Langlöchern geführten Stift auf, der mit den Zähne der Rastausnehmungen 116 in Wirkverbindung gebracht werden kann. Die Form des Langlochs und die Form der Zähne erlauben die Fixierung ohne Feder.

### BEZUGSZEICHENLISTE

- 100: Rohrhalterung (nicht ausgerichtet)
- 101: Rohrhalterung (ausgerichtet)
- 102: Biegekante / Verbindungsbereichen
- 104: Basisplatte
- 105: Seitenschenkel der Basisplatte
- 106: Montagestruktur
- 107: Öffnungen
- 108: Rastöffnung
- 109: Spitzförmige Vorsprünge
- 110: Spitz zulaufendes Schlitzpaar
- 111: Stützelement
- 112: Stütze
- 113: Basisschenkel der Stütze
- 114: Seitenschenkel der Stütze
- 115: Rohrhalterungsstruktur
- 116: Rastausnehmungen
- 117: Rastelement
- 118: Seitlich angeordneter Vorsprung
- 119: Rastnase
- 120: Kante der Basisplatte
- 121: Schiene
- 122: Lasche
- 123: Entlastungsschnitt
- 124: Ablaufdiagramm
- 125: Arretiervorrichtung

- 130: Schwenkvorrichtung
- 131: Schwenkachse
- 132: Schwenkwelle
- 133: Schwenkaufbauelemente
- 134: Schwenkanschlag
- 135: Schwenkfeder

- 200: Rohrschellenbügel
- 201: Bügelhöhenverstellvorrichtung
- 202: Bügeleinrastvorrichtung
- 203: Bügelhalterung
- 204: Rohrauflagebereich
- 205: Bügelfeder / elastischer Ring
- 250: Kabelbinder
- 251: Führungsöffnung
- 252: Kabelbinderhalterung
- 260: Rohr

- S0: Ausbilden
- S1: Bereitstellen
- S2: Biegen / Schwenken

## Patentansprüche

1. Rohrhalterung (100) zum Befestigen von mindestens einem Rohr (260), aufweisend eine Basisplatte (104) und mindestens ein mit der Basisplatte (104) einteilig oder mehrteilig ausgebildetes Stützelement (111),
a. wobei die Basisplatte (104), eine Montagestruktur (106) aufweist, die dazu ausgebildet ist die Basisplatte (104) an einer Basisstruktur, insbesondere einer Verschalung oder Armierung, zu befestigen,
b. wobei das mindestens eine Stützelement (111) dazu ausgebildet ist mittels einer Schwenk- und/oder Biegebewegung, insbesondere senkrecht, zur Basisplatte (104) ausgerichtet zu werden, wodurch das dadurch ausgerichtete Stützelement (111) mindestens teilweise eine Stütze (112) der Rohrhalterung (100) zum Befestigen des mindestens einen Rohrs (260) bildet.

2. Rohrhalterung (100) gemäss einem der vorhergehenden Ansprüche, wobei das mit der Basisplatte (104) einteilig ausgebildete Stützelement (111) ausgebildet ist um eine Biegekante (102) mittels der Biegebewegung zur Basisplatte (104) ausgerichtet zu werden, oder wobei das mit der Basisplatte (104) mehrteilig ausgebildete Stützelement (111) ausgebildet ist um eine Schwenkachse (131) mittels der Schwenkbewegung zur Basisplatte (104) ausgerichtet zu werden..

3. Rohrhalterung (100) gemäss einem der vorhergehenden Ansprüche, wobei die Basisplatte (104) eine Mehrzahl von spitzförmigen Vorsprüngen (109) aufweist, die senkrecht zur Basisplatte (104) ausgerichtet sind und zumindest teilweise die Montagestruktur (106) bilden, und / oder wobei die Basisplatte (104) mindestens ein spitz zulaufendes Schlitzpaar (110) aufweist, das einen unausgerichteten spitzförmigen Vorsprung (109) bildet, wobei der spitzförmigen Vorsprung (109) dazu ausgebildet ist mittels einer Biegebewegung senkrecht zur Basisplatte (104) ausgerichtet zu werden, wodurch der dadurch ausgerichtete spitzförmigen Vorsprung (109) zumindest teilweise die Montagestruktur (106) bildet.

4. Rohrhalterung (100) gemäss einem der vorhergehenden Ansprüche, wobei die Basisplatte (104) mindestens einen Seitenschenkel (105) aufweist, der sich mit einem vordefinierten Winkel, insbesondere senkrecht, zur Basisplatte (104) erstreckt, insbesondere senkrecht ausgehend von einer Kante (120) der Basisplatte (104) erstreckt, wobei der Seitenschenkel (105) dazu eingerichtet ist, mindestens teilweise die Montagestruktur (106) zu bilden.

5. Rohrhalterung (100) gemäss Anspruch 4, wobei der mindestens eine Seitenschenkel (105) oder eine Mehrzahl der Seitenschenkel (105) zusammen mit der Basisplatte (104) eine H- h-, L- oder V-Form bildet.

6. Rohrhalterung (100) gemäss einem der vorhergehenden Ansprüche, wobei die Basisplatte (104) und / oder mindestens einer der Seitenschenkel (105) eine Schiene (121) bildet.

7. Rohrhalterung (100) gemäss einem der vorhergehenden Ansprüche, wobei das mindestens eine Stützelement (111) einen ersten Basisschenkel (113) und mindestens einen Seitenschenkel (114) aufweist, wobei sich der Seitenschenkel (114) unter einem Winkel, insbesondere senkrecht, von dem Basisschenkel (113) aus erstrecken oder wobei das mindestens eine Stützelement (111) zwei Seitenschenkel (114) aufweist, die sich jeweils unter einem Winkel, insbesondere senkrecht, von dem Basisschenkel (113) aus erstrecken, wobei die beiden Seitenschenkel (114) beabstandet voneinander ausgerichtet sind und insbesondere parallel zueinander ausgerichtet sind.

8. Rohrhalterung (100) gemäss einem der vorhergehenden Ansprüche, wobei das mindestens eine ausgerichtete Stützelement (111) die Stütze (112) der Rohrhalterung (100) alleine bildet oder wobei das ausgerichtete Stützelement (111) in Kombination mit einem Verbindungselement, welches mit dem Stützelement (111) verbunden ist, die Stütze (112) der Rohrhalterung bildet.

9. Rohrhalterung (100) gemäss Anspruch 8, wobei das mindestens eine Stützelement (111) und / oder das Verbindungselement eine Rohrhalterungsstruktur (115) aufweist, die dazu ausgebildet ist das mindestens eine Rohr (260) an dem mindestens einen Stützelement (111) zu befestigen.

10. Rohrhalterung (100) gemäss einem der vorhergehenden Ansprüche, wobei das mindestens eine Stützelement (111) und / oder die Basisplatte (104) eine Arretiervorrichtung (125), insbesondere formschlüssige Arretiervorrichtung (125), auf, die dazu ausgebildet ist das Stützelement (111) nach Ausrichtung zur Stütze (112) zu arretieren.

11. Rohrhalterung (100) gemäss einem der vorhergehenden Ansprüche, wobei das mindestens eine Stützelement (111) an seinem der Biegekante (102) oder der Basisplatte (104) zugewandten Ende ein Rastelement (117) aufweist, das dazu ausgebildet ist in eine Rastöffnung (108) in der Basisplatte (104) einzugreifen, wenn das Stützelement (111) mittels der Schwenk und/oder Biegebewegung, insbesondere senkrecht, zur Basisplatte (104) ausgerichtet wird.

12. Rohrhalterung (100) gemäss einem der vorhergehenden Ansprüche, wobei die Basisplatte (104) zwei mit der Basisplatte (104) einteilig oder mehrteilig ausgebildete Stützelemente (111) aufweist, wobei die Stützelemente (111) derart an der Basisplatte (104) angeordnet sind, dass sie jeweils mittels der Schwenk- und/ oder Biegebewegung voneinander gegenüberliegend beabstandet ausrichtbar sind, und insbesondre parallel oder versetzt zueinander ausrichtbar sind.

13. Rohrhalterung (101) gemäss einem der vorhergehenden Anspruch, zusätzlich aufweisend einen Rohrschellenbügel (200), der nach Ausrichtung des mindestens einen Stützelements (111) entlang der mindestens einen resultierenden Stütze (112) an verschiedenen Positionen zur Befestigung des mindestens einen Rohrs (260) ausrichtbar ist.

14. Rohrhalterung (101) gemäss einem der vorhergehenden Ansprüche, aufweisend die mindestens eine senkrecht zur Basisplatte (104) ausgerichtete Stütze (112).

15. Verfahren zur Herstellen einer einteiligen Rohrhalterung (101) zum Befestigen mindestens einen Rohrs, wobei das Verfahren folgende Schritte umfasst:
a. Bereitstellen (S1) einer unausgerichteten Rohrhalterung (100) aufweisend eine Basisplatte (104) und mindestens ein mit der Basisplatte (104) einteilig oder mehrteilig ausgebildetes Stützelement (111) gemäss einem der Patentansprüche 1 bis 14;
b. Biegen und / oder Schwenken (S2) des mindestens einen Stützelements (111) bis das Stützelement (111) senkrecht zur Basisplatte (104) ausgerichtet ist, wodurch das dadurch ausgerichtete Stützelement (111) mindestens teilweise die Stütze (112) der ausgerichteten Rohrhalterung (101) zum Befestigen des mindestens einen Rohrs bildet.
